(19) **Europäisches Patentamt / European Patent Office / Office européen des brevets**

(11) **EP 3 185 461 B1**

(12) # EUROPEAN PATENT SPECIFICATION

(45) Date of publication and mention of the grant of the patent:
**08.04.2020 Bulletin 2020/15**

(21) Application number: **15833533.1**

(22) Date of filing: **20.05.2015**

(51) Int Cl.:
***H04J 3/06*** *(2006.01)*

(86) International application number:
**PCT/JP2015/064398**

(87) International publication number:
**WO 2016/027532 (25.02.2016 Gazette 2016/08)**

(54) **COMMUNICATION CONTROL APPARATUS AND PROTECTION RELAY SYSTEM**

KOMMUNIKATIONSSTEUERUNGSVORRICHTUNG UND SCHUTZRELAISSYSTEM

APPAREIL DE COMMANDE DE COMMUNICATION ET SYSTEME DE PROTECTION RELAIS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.08.2014 JP 2014165675**

(43) Date of publication of application:
**28.06.2017 Bulletin 2017/26**

(73) Proprietor: **Hitachi, Ltd.**
**Tokyo 100-8280 (JP)**

(72) Inventors:
• **MARUYAMA Tatsuya**
**Tokyo 100-8280 (JP)**
• **YAMADA Tsutomu**
**Tokyo 100-8280 (JP)**
• **KIDO Mitsuyasu**
**Tokyo 100-8280 (JP)**
• **YOSHIDA Shoji**
**Tokyo 100-8280 (JP)**

(74) Representative: **Mewburn Ellis LLP**
**City Tower**
**40 Basinghall Street**
**London EC2V 5DE (GB)**

(56) References cited:
| | |
|---|---|
| WO-A1-2013/094671 | WO-A1-2014/112264 |
| JP-A- 2004 186 877 | JP-A- 2012 023 654 |
| JP-A- 2012 034 224 | JP-A- 2013 074 338 |
| JP-A- 2014 064 396 | US-A1- 2013 235 878 |
| US-A1- 2014 098 706 | |

**Description**

Technical Field

The present invention relates to a communication control apparatus and a network relay apparatus that configure a communication network.

Background Art

In a control system configured to be distributed, it is sometimes requested to synchronize times among connection terminals according to an application to be realized. In the case of a distributed control system connected by a network, times can be synchronized by transmission and reception of a time synchronization packet via the network.

For example, when a signal of sound, a video, or the like is transmitted to a remote place, it is a general practice to digitize an analog signal. In that case, there is a system for executing encoding processing of the signal and decoding processing in the remote place using a common frequency. In such a system, a frequency used on a transmission side and a frequency used on a reception side need to be the same and stable . Therefore, frequency synchronization and time synchronization are necessary.

In base stations of wireless communication, if frequencies are stable among base stations such as routers and between the base stations and portable devices, handover can be smoothly executed. Therefore, synchronization among the base stations is requested.

Besides, examples of applications of the time synchronization include fields of instrumentation and measurement and fields of an industrial manufacturing apparatus, a protection control apparatus of a power system, an IED (Intelligent electronic device), and the like.

Examples of a time synchronization system using a network include an NTP (Network Time Protocol), an SNTP (Simple Network Time Protocol), and IEEE1588.

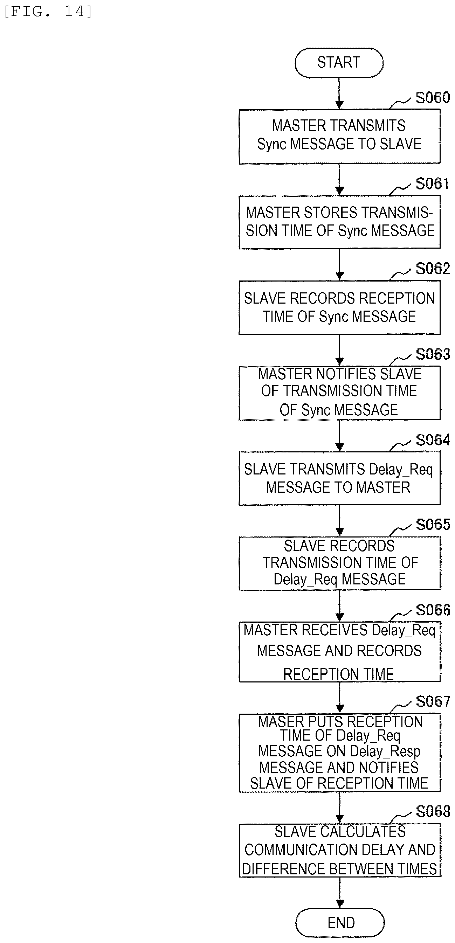

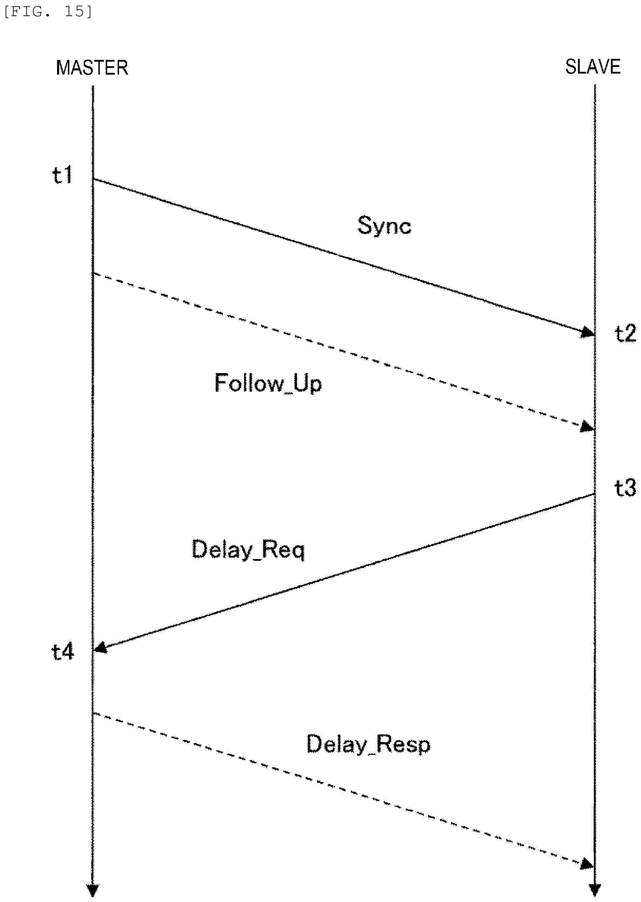

An execution procedure of a time synchronization protocol of the IEEE1588 is explained in Fig. 14. Exchange of messages in the IEEE1588 is shown in Fig. 15.

The IEEE1588 adopts a master-slave configuration. First, a master transmits a Sync message to a slave (S060) . At this point, the master stores transmission time t1 of the Sync message (S061). When receiving the Sync message, the slave records reception time t2 of the Sync message (S062).

The master notifies the slave of t1 with one of means described below. One of the means is means for putting information concerning t1 on the Sync message. The other is means for putting the information concerning t1 on a Follow-up message following the Sync message.

Subsequently, the slave transmits a Delay_Req message to the master (S064). At this point, the slave records transmission time t3 of the Delay_Req message (S065). When receiving the Delay_Req message, the master records reception time t4 of the Delay_Req message (S066). The master puts information concerning t4 on a Delay_Resp message and notifies the slave of t4 (S067).

The slave that has received the Delay_Resp message calculates a communication delay between the master and the slave and a difference among the times from t1, t2, t3, and t4 (S068) .

The calculation of the communication delay is based on the premise that the communication delay between the master and the slave is equal in forward and backward paths. Therefore, a communication delay td of one way is represented by Expression (1) .

$$td=((t4-t3)+(t2-t1))/2 \qquad (1)$$

A difference tdiff between times of the master and the slave is represented by Expression (2).

$$tdiff=\{(t4-t3)-(t2-t1)\}/2 \qquad (2)$$

The master and the slave synchronize the times according to this tdiff.

In this way, the time synchronization between the communication apparatuses is based on the premise that forward and backward delays of a synchronization packet are equal or the premise that, even when there is a time difference between the forward and backward delays, the time difference is known.

However, when a network is configured using a relay apparatus such as a network switch and the network is shared among a plurality of connection terminals, time synchronization packets are queued in the relay apparatus such as the network switch and fluctuation occurs in a forward and backward delay difference. Therefore, synchronization accuracy is deteriorated.

On the other hand, in a technique described in Non Patent Literature 1, a transfer delay of a packet in a network device is measured using mechanisms called end-to-end TC (Transparent Clock) and peer-to-peer TC (Transparent Clock). A difference between forward and backward communication delays is calculated by reflecting the measured transfer delay on data in the packet.

In a technique described in Patent Literature 1, a queuing delay in a network device is estimated by transmitting a plurality of packets for delay estimation at a predetermined transmission interval and comparing an interval of reception of the plurality of packets for delay estimation and the predetermined transmission interval.

Citation List

Non Patent Literature

Non Patent Literature 1: IEEE 1588-2008 "IEEE Standard for a Precision Clock Synchronization Protocol for Networked Measurement and Control Systems"

Patent Literature

Patent Literature 1: JP-A-2010-74600

US 2014/098 706 A1 describes communication control equipment that is connected to a plurality of communication control equipment via a network and is configured to be time-synchronized with the plurality of communication control equipment by using a time synchronization procedure using a communication including at least request packets and acknowledgement packets.

JP 2012 023 654 A describes a time synchronization device for synchronizing the time of a subordinate device with the time of a main device by exchanging packets for synchronization via a packed-based network. The subordinate device exchanges the packets for synchronization between with a plurality of main devices, and calculates each priority order of the plurality of main devices, and based on the priority order of the main devices and the packets for synchronization, synchronizes the time of the subordinate device with the time of the main device.

Summary of Invention

Technical Problem

However, the end-to-end TC and the peer-to-peer TC in the technique described in Non Patent Literature 1 have a problem in that an exclusive function for acquiring high precision time stamp and updating information concerning synchronization packets is necessary.

In the technique described in Patent Literature 1, both of the master and the slave, which execute the time synchronization protocol, need to take measures. Therefore, there is a problem in that it is difficult to configure a network using a connection terminal and a relay apparatus conforming to a standard.

Therefore, the present invention provide a communication control apparatus and a protection relay system that enable high precision time synchronization, while using ordinary apparatuses to configure a communication network.

Solution to Problem

In order to solve the problems, a communication control apparatus and a protection relay system according to the independent claims is provided.

Advantageous Effect of Invention

The present invention enables high precision time synchronization, while using ordinary apparatuses to configure a communication network.

Problems, configurations, and effects other than those explained above are clarified from the following explanation of embodiments. Any reference to "embodiment (s)" or "aspect(s) of the invention" in this description not falling under the scope of the claims should be interpreted as illustrative example(s) for understanding the invention.

Brief Description of the Drawings

[Fig. 1] Fig. 1 is a system configuration example configured using a communication control apparatus according to a first embodiment of the present invention.

[Fig. 2] Fig. 2 is a hardware configuration of the communication control apparatus shown in Fig. 1.

[Fig. 3] Fig. 3 is a functional configuration diagram of the communication control apparatus.

[Fig. 4] Fig. 4 shows the operation of a network relay apparatus in the case in which packets collide.

[Fig. 5] Fig. 5 shows a functional configuration diagram of a communication apparatus.

[Fig. 6] Fig. 6 is a flowchart showing synchronization processing operation in the communication control apparatus.

[Fig. 7] Fig. 7 is a data table showing a correspondence relation between the network relay apparatus and a reception interval threshold value.

[Fig. 8] Fig. 8 shows a relation between the number of stages of the network relay apparatus and a response time.

[Fig. 9] Fig. 9 shows a functional configuration example of a communication apparatus in which a domain of the IEEE1588 standard is used.

[Fig. 10] Fig. 10 shows a group configuration example based on a communication delay.

[Fig. 11] Fig. 11 shows an example in which another communication flow is not addressed to the communication control apparatus.

[Fig. 12] Fig. 12 shows a functional configuration of a communication apparatus 123 in a second embodiment of the present invention.

[Fig. 13] Fig. 13 shows processing operation of the communication apparatus.

[Fig. 14] Fig. 14 is an execution procedure of a time synchronization protocol of the IEEE1588.

[Fig. 15] Fig. 15 shows exchange of messages in the IEEE1588.

[Fig. 16] Fig. 16 shows a system example in which a time synchronization control apparatus is used.

[Fig. 17] Fig. 17 shows a system configuration of a third embodiment of the present invention.

[Fig. 18] Fig. 18 shows a system configuration of a fourth embodiment of the present invention.

[Fig. 19] Fig. 19 shows a communication delay stored in a time synchronization packet.

[Fig. 20] Fig. 20 shows a system configuration in the case in which another flow is present.

[Fig. 21] Fig. 21 shows another system configuration of the fourth embodiment of the present invention.

[Fig. 22] Fig. 22 shows a system configuration by a ring network.

[Fig. 23] Fig. 23 shows a system configuration of a current differential protection relay system according to a fifth embodiment of the present invention.

Description of Embodiments

Embodiments of the present invention are explained below with reference to the drawings.

First Embodiment

(System configuration)

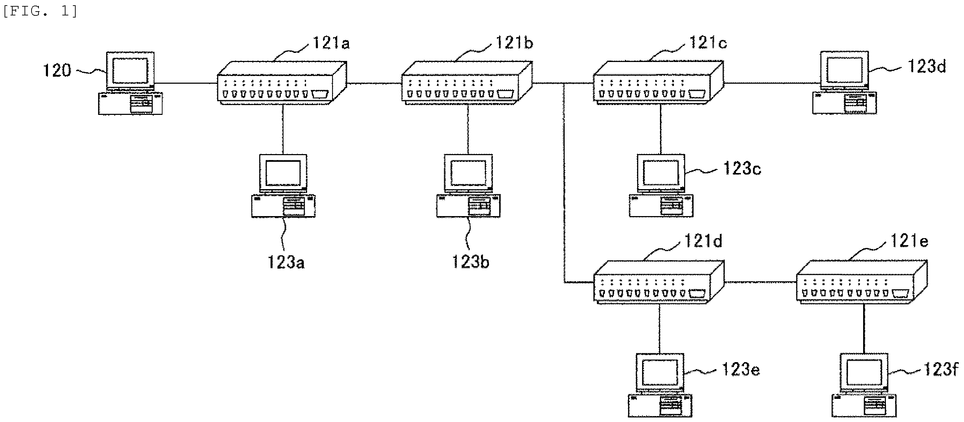

Fig. 1 is a system configuration example configured using a communication control apparatus 120 according to an embodiment of the present invention. The communication control apparatus 120 is connected to other network relay apparatuses 121 (a to e) or communication apparatuses 123 (a to f) and communicates with these apparatuses.

The network relay apparatuses 121 are, for example, network switches, routers, gateways, and switches capable of rewriting packet/route control in a software defined network and relay transmission of packets transmitted by the communication control apparatuses and the communication apparatuses in the network.

A network 122 (connection among the communication control apparatus 120, the network relay apparatuses 121, and the communication apparatus 123) is, for example, IEEE802.3, various industrial networks, IEC 61784, or IEC 61158. Note that connection among all of the communication control apparatus 120, the network relay apparatuses 121, and the communication apparatuses 123 does not have to be the same communication system.

(Hardware configuration)

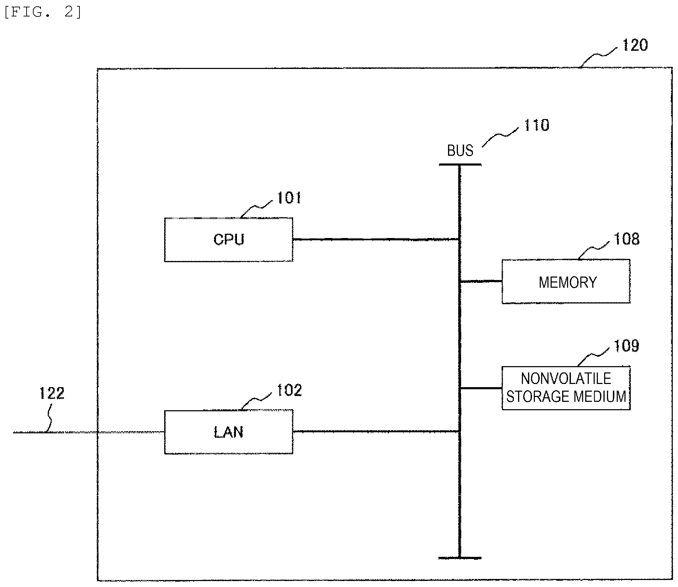

Fig. 2 is a hardware configuration of the communication control apparatus 120 shown in Fig. 1.

A CPU 101 transfers a program from a nonvolatile storage medium 109 to a memory 108 and executes the program. An execution processing program is, for example, an operating system (hereinafter referred to as OS) or an application program operating on the OS.

A LAN 102 is a transceiver IC (Integrated Circuit) implemented with a communication function with the network 122. The LAN 102 receives a communication request from the program operating on the CPU 101 and communicates with the network 122. An implementation form of the LAN 102 is, for example, a MAC (Media Access Control) chip of the IEEE802.3 standard, a PHY (physical layer) chip, a composite chip of MAC and PHY, an FPGA (Field Programmable Gate Array), a CPLD (Complex Programmable Logic Device), an ASIC (Application Specific Integrated Circuit), or a gate array. Note that the LAN 102 may be included in the CPU 101 or a chip set that controls an information route inside a computer.

The memory 108 is a temporary storage region for the CPU 101 to operate. An OS, application programs, and the like transferred from the nonvolatile storage medium 109 are stored in the memory 108.

The nonvolatile storage medium 109 is a storage medium for information and is used for storage of an OS, application programs, device drivers, and the like, storage of a program for operating the CPU 101, and storage of an execution result of the program. The nonvolatile storage medium 109 is, for example, a hard disk drive (HDD), a solid state drive (SDD), and a flash memory. As the nonvolatile storage medium 109, an easily removable external storage medium, that is, a floppy (registered trademark) disk, a CD, a DVD, a Blu-ray (registered trademark), a USB memory, a compact flash (registered trademark), or the like may be applied.

A bus 110 connects the CPU 101, the LAN 102, the memory 108, and the nonvolatile storage medium 109 to one another. The bus 110 is, for example, a PCI bus, an ISA bus, a PCI Express bus, a system bus, or a memory bus.

(Functional configuration)

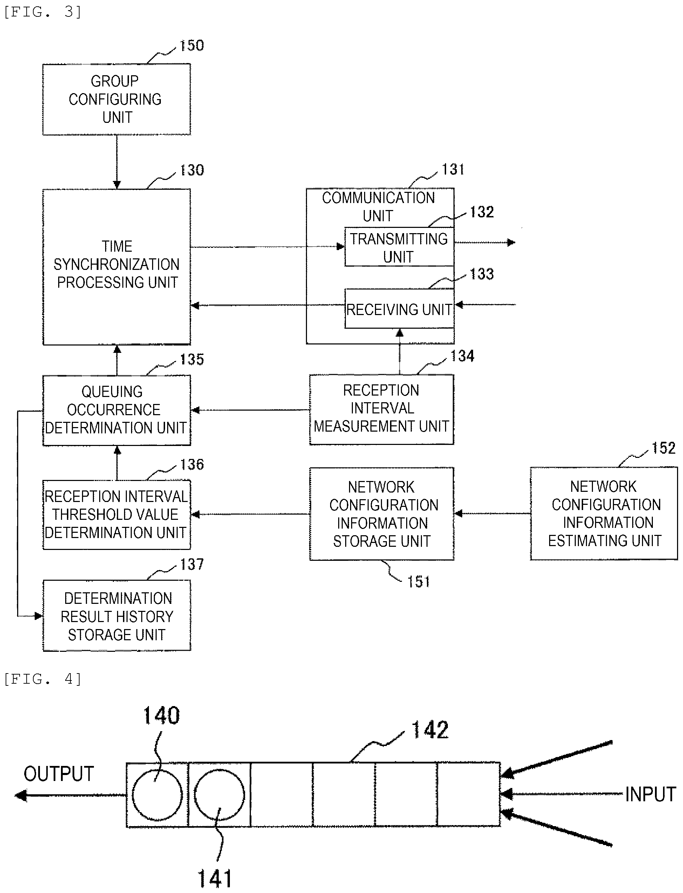

Fig. 3 is a functional configuration diagram of the communication control apparatus 120 shown in Figs. 1 and 2.

A time synchronization processing unit 130 is a functional unit that executes a time synchronization procedure. A time synchronization protocol executed by the time synchronization processing unit 130 is IEEE 1588, NTP, SNTP, or the like. The time synchronization processing unit 130 may be configured by software on the CPU 101 or may be configured as a hardware logic using the LAN 102 implemented in FPGA or CPLD. Alternatively, the time synchronization processing unit 130 may be configured by both of the software on the CPU 101 and the LAN 102. In this case, a measurement function of transmission timing and reception timing of a packet or generation of a packet format is processed by the LAN 102.

A communication unit 131 is a transmission and reception function of predetermined packets in a communication protocol and includes a transmitting unit 132, which is a transmission function of the predetermined packets in the communication protocol, and a receiving unit 133, which is a reception function of the predetermined packets in the communication protocol. The communication unit 131, the transmitting unit 132, and the receiving unit 133 are configured by the LAN 102 shown in Fig. 2.

A reception interval measurement unit 134 measures a reception interval of the predetermined packets received by the receiving unit 133. The reception interval is measured by clocking timings when the receiving unit 133 receives packets and measuring a difference among the timings or calculating, according to the IEEE1588 standard, a difference among timings when packets for time synchronization recorded by the receiving unit 133 are received. The reception interval measurement unit 134 may be configured as software operating on the CPU 101 or may be configured by the LAN 102. The reception interval measurement unit 134 may be configured by a combination of the software operating on the CPU 101 and the LAN 102. For example, the reception timings are clocked by the LAN 102 and a difference among the reception timings is calculated by the software operating on the CPU 101 to calculate the reception interval. In this case, information for calculating the reception interval is disclosed from the LAN 102 to the CPU 101. At this point, a register of an IC may be used or the LAN 102 may write the information in a predetermined region of the memory 108.

A queuing occurrence determination unit 135 determines whether packets for time synchronization are queued in a packet buffer in the network relay apparatus 121. The queuing of the packets for time synchronization in the packet buffer in the network relay apparatus 121 is determined using the reception interval of the packets measured by the reception interval measurement unit 134 and a reception interval threshold value set by a reception interval threshold value determination unit 136 explained below. The queuing occurrence determination unit 135 is configured by, for example, any one or a plurality of software operating on the CPU 101 and software or hardware operating on an IC configuring the LAN 102.

"A state in which packets are queued in the packet buffer in the network relay apparatus 121 and a waiting time occurs" shown in Fig. 4 is hereinafter described as "collision".

The reception interval threshold value determination unit 136 sets, on the basis of network configuration information stored by a network configuration information storage unit 151 explained below, a reception interval threshold value serving as a reference value for determining presence or absence of collision of packets in the network relay apparatus 121. The reception interval threshold value determination unit 136 may be configured as software on the CPU 101 or may be configured as software or hardware on the IC configuring the LAN 102. The reception interval threshold value may be capable of being set by input means on a board such as a register or a dip switch or setting means such as a software API (Application Programming Interface) or a GUI (Graphical User Interface).

A determination result history storage unit 137 sequentially records a determination result of the queuing occurrence determination unit 135, stores the determination result as history information, and displays or notifies the determination result and the history information with some external notifying means (display indication, an electronic mail, alarm sound, etc. not shown in the figure). The history information stored by the determination result history storage unit 137 is occurrence of collision, an identifier of the communication apparatus 123, which is a transmission source of synchronization packets that cause the collision, time when the collision occurs, and the like. Further, a total number of times of occurrence of collision, an average interval of the collision occurrence, and the like that can be calculated from these kinds of information are stored as the history information. The reception interval threshold value determination unit 136 can extract related information from the network configuration information storage unit 151 on the basis of information concerning the communication apparatus 123 (a slave) related to the colliding synchronization packets stored as the history information. The determination result history storage unit 137 is configured by any one or a plurality of software on the CPU 101, the memory 108, the nonvolatile storage medium 109, and software or hardware on the IC configuring the LAN 102.

A group configuring unit 150 groups the communication apparatuses 123 on the basis of information concerning a network configuration and presents a group of the communication apparatuses 123 to the time synchronization processing unit 130 according to the number of times of transmission, a success or failure situation of the time synchronization procedure with the communication apparatuses 123, and the like. For example, the group of the communication apparatuses 123 is presented on the basis of, as the success or failure situation of the time synchronization procedure, the number of times of success of time synchronization, the number of times of failure of the time synchronization, or an elapsed time after the time synchronization is established last. The group configuring unit 150 may be configured as software on the CPU 101 or may be configured as software or hardware on the IC configuring the LAN 102.

The network configuration information storage unit 151 stores network information used by the group configuring unit 150 to group the communication apparatuses 123. The network configuration information is, for example, information concerning the communication apparatuses 123 configuring the network (the number of apparatuses, performance of components configuring the apparatuses, network addresses, identifiers and the like of the apparatuses, and connection positions in the network), information concerning the network relay apparatuses 121 located on a route to the communication control apparatus 120, network topology, and measurement values of communication delays to the apparatuses. The network configuration information storage unit 151 is configured by any one or a plurality of software on the CPU 101, the memory 108, the nonvolatile storage medium 109, and software or hardware on the IC configuring the LAN 102. For example, the information stored by the network configuration information storage unit 151 is extracted, acquired, calculated, and determined by the software on the CPU 101 and stored on the memory 108 or the nonvolatile storage medium 109.

A network configuration information estimating unit 152 estimates the configuration of the network to which the communication control apparatus 120 is connected and records an estimation result in the network configuration information storage unit 151.

(Setting means for a reception interval threshold value)

Setting means for a reception interval threshold value in the reception interval threshold value determination unit 136 is explained.

<Network relay apparatus one stage>

First, a case in which the number of stages of the network relay apparatus 121 is one is explained.

Whether packets collide is determined by comparing, with the queuing occurrence determination unit 135, a reception interval of the packets measured by the reception interval measurement unit 134 and the reception interval threshold value set by the reception interval threshold value determination unit 136. The reception interval threshold value is calculated as explained below from one or a plurality of values of a communication processing time of the packets, an inter frame gap, and a communication processing time of the network relay apparatus 121.

First, a communication processing time Tp of the packets is calculated by Expression (3).

$$Tp = Sp \times 8 / Th \qquad (3)$$

where, Sp represents a packet size (unit: byte) and Th represents a communication throughput. For example, the communication processing time Tp in the case in which a packet having Sp=64 (byte) is transmitted on a network by the IEEE802.3 standard having Th=100 (Mbps) is 64(byte)$\times$8(bit/byte)/100(Mbps)=5.12$\mu$s.

The inter frame gap (IFG) is defined in the IEEE802.3 standard as an interval until the following frame is transmitted after a frame is transmitted onto a communication route. The inter frame gap is defined as 96 bit time (time required for transferring 96 bits). The inter frame gap IFG can be calculated by Expression (4).

$$IFG=96/Th \qquad (4)$$

For example, in a network by the IEEE802.3 standard of Th=100 Mbs, the IFG is 96(bit)/100(Mbps)=0.96$\mu$s.

A communication processing time of the network relay apparatus 121 depends on processing contents of the respective network relay apparatuses 121. The processing content of the network relay apparatus 121 is, for example, extraction processing for destination port information and transfer processing of a packet in the network relay apparatus 121.

Note that, as the communication processing time of the network relay apparatus 121, a value described in a data sheet or a manual of the network relay apparatus 121 may be used or may be experimentally calculated by measuring a transfer delay of the network relay apparatus 121.

When the transfer delay of the network relay apparatus 121 is measured, two communication ports are provided in a certain communication terminal and, after a test packet is transmitted from one communication port, the test packet is received by the other communication port through the network relay apparatus 121. A value obtained by subtracting the communication processing time of the packet by Expression (3) from a communication delay at this point (e.g., a value obtained by subtracting timing when the head of the packet is transmitted from timing when the head of the packet is received) is the communication processing time of the network relay apparatus 121.

The communication processing time of the network relay apparatus 121 is likely to change according to a packet size of a processing target packet, presence of other packets before and after the target packet, or an information amount of a managed communication route. Therefore, the communication processing time is desirably estimated according to various conditions. For example, an estimated communication processing time Ts of the network relay apparatus 121 can be calculated by Expression (5).

$$Ts=A+kSp+B+mC \qquad (5)$$

where, A represents a fixed delay during packet transfer and k represents a constant of proportionality for a packet size Sp. B represents a delay that takes a non-zero value when another packet is present before the target packet in a packet buffer of the network relay apparatus 121. C represents an information amount of a communication route and m represents a constant of proportionality for the information amount C of the communication route.

The operation of the network relay apparatus 121 in the case in which packets collide in the network relay apparatus 121 is shown in Fig. 4. A buffer 142 is a packet buffer in the network relay apparatus 121. The buffer 142 has a data structure of a First-in First-out (FIFO) type. In Fig. 4, transmission processing of a packet 140 is being performed. A packet 141 is queued in the buffer 142 following the packet 140. At this point, transmission of the packet 141 is delayed by the packet 140 preceding in the buffer 142. The packet 141 collides with the packet 140 in the buffer 142.

The communication control apparatus 120 is connected to an output side in Fig. 4. The packet 140 and the packet 141 output from the buffer 142 are sequentially received by the communication control apparatus 120. As explained above, the communication control apparatus 120 measures a reception interval of the packet 140 and the packet 141 and determines presence or absence of collision of the packet 141 and the packet 140 on the basis of comparison of a measurement result and a reception interval threshold value. In Fig. 4, since the packet 141 and the packet 140 collide, the packet 141 is delayed by a communication processing time actually required for the packet 140 until the communication control apparatus 120 receives the packet 141. At this point, the communication control apparatus 120 determines from a comparison result of the measured reception interval and a reception interval threshold value Tr explained below that queuing of packets has occurred in the network relay apparatus 121.

When the reception interval is set as an interval between the heads of the preceding and following packets, the reception interval threshold value Tr is calculated by Expression (6).

$$Tr=Tp+IFG+Ts \qquad (6)$$

where, the communication processing time Tp of a packet, the inter frame gap IFG, and the estimated processing time Ts of the network relay apparatus 121 can be respectively calculated by Expression (3), Expression (4), and Expression (5).

Note that, when it is difficult to calculate a value of Ts, it is also possible to omit Ts, provisionally set Tr according to Expression (7), and optimize the operation of the communication control apparatus 120 according to margin adjustment.

$$Tr=Tp+IFG \qquad (7)$$

When the reception interval is set as a gap between the preceding and following packets, that is, an interval between the trailing end of the preceding packet and the head of the following packet, the reception interval threshold value Tr is calculated by the following Expression (8). Further, when it is difficult to calculate a value of Ts, it is also possible to omit Ts as in Expression (7) and provisionally set Tr according to Expression (9).

$$Tr=IFG+Ts \qquad (8)$$

$$Tr=IFG \qquad (9)$$

Note that communication times of a preamble and a trailer defined in a protocol of the network 122 need to be taken into account according to the positions of the head and the trailing end of a packet. For example, in the IEEE802.3, a preamble of 7 octets and an SFD (Start Frame Delimiter) of 1 octet flow on the network preceding a header. An FCS (Frame Check Sequence) of 4 octets is added to the end of the packet. For example, in Expression (9), since Tr is only IFG, the end of the FCS is set as the trailing end of the packet and the head of the preamble is set as the head of the packet. A processing time of these data may be included in a calculation formula of the reception interval threshold value Tr or may be separately included in a margin according to the positions of the head and the trailing end of the packet.

<Network relay apparatus plural stages>

A case in which the number of stages of the network relay apparatuses 121 is plural is explained.

In the case of a plurality of stages of the network relay apparatuses 121, the reception interval threshold value Tr can be calculated by Expression (10) using a reception interval threshold value Tr1 per one stage.

$$Tr=Tr1{\times}N \qquad (10)$$

where, Tr1 can be calculated by Expressions (6) to (9) described above. N represents the number of stages of the network relay apparatuses 121 (N is a natural number equal to or larger than 2).

When it is assumed that an increase for each of the network relay apparatuses 121 is a predetermined value, the reception interval threshold value Tr can be calculated by Expression (11) or Expression (12). Note that Expression (11) can be applied when the increase is fixed irrespective of a difference of the network relay apparatuses 121. Expression (12) can be applied when the increase is different in the respective network relay apparatuses 121.

$$Tr=Tr1+N{\times}\alpha \qquad (11)$$

$$Tr=Tr1+\Sigma\alpha i \qquad (12)$$

where, $\alpha$ and $\alpha i$ (i is a natural number 1 to N) are increases in the respective network relay apparatuses 121. "$\Sigma$" indicates a sum of $\alpha 1$ to $\alpha N$ as usual. As the increases $\alpha$ and $\alpha i$, values described in the data sheet or the manual of the network relay apparatuses 121 may be used, or the increases $\alpha$ and $\alpha i$ may be experimentally calculated. When the increases $\alpha$ and $\alpha i$ are experimentally calculated, three communication apparatuses are prepared, one of the communication apparatuses is set as a time synchronization master, two of the communication apparatuses are set as time synchronization slaves, the number of stages of network relay apparatuses between the master and the two slaves is changed, and a reception interval of response packets from the two slaves is measured.

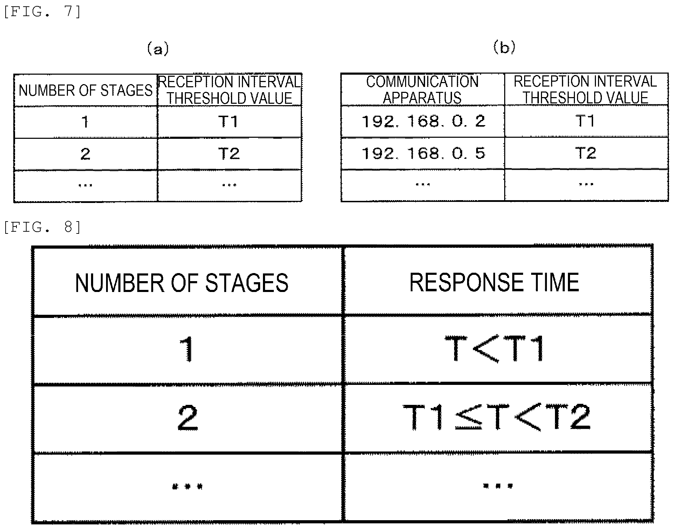

Expression (11) is a linear expression of the number of stages N of the network relay apparatuses 121 but may be a multidimensional expression or an approximation formula in which the measurement result is used. Alternatively, as shown in Fig. 7, a correspondence relation between the plurality of stages of the network relay apparatuses 121 and the reception interval threshold value may be managed by table data rather than a predetermined arithmetic expression. Fig. 7(a) shows table data in the case in which the reception interval threshold value changes according to the number of stages of the network relay apparatuses 121. Fig. 7 (b) shows table data in the case in which the reception interval threshold value changes depending on the communication apparatus 123. Note that the latter is suitable, for example, when, depending on the communication apparatus 123, the network relay apparatuses 121 of a route between the communication apparatus 123 and the communication control apparatus 120 is different according to, for example, a positional relation between the master and the slave.

The reception interval threshold value shown in Expressions (6) to (12) and Fig. 7 is a threshold value in the case in which the transmission source communication apparatuses 123 (slaves) of colliding synchronization packets are in contact with the same network relay apparatus 121. When the positions in the network of the transmission source communication apparatuses 123 of the colliding synchronization packets are different, the reception interval threshold value is set reflecting a positional relation between the communication apparatuses 123. For example, it is assumed that transmission sources of two packets determined as having collided are the communication apparatus 123e and the communication apparatus 123f shown in Fig. 1. The number of stages of the network relay apparatuses 121 in the communication route between the communication apparatus 123 and the communication control apparatus 120 is three concerning the communication apparatus 123e and is four concerning the communication apparatus 123f. In this case, a reception interval threshold value of the network relay apparatus 121d, to which the communication apparatus 123e is connected, in the communication route with a smaller number of stages is used. This is because collision of two packets, transmission sources of which are the communication apparatus 123e and the communication apparatus 123f, occurs in the network relay apparatus 121d.

In this way, when the positions in the network of the transmission source communication apparatuses 123 of the colliding two synchronization packets are different, collision occurs in a network relay apparatus to which a transmission source communication apparatus having a smaller number of stages of network relay apparatuses is connected. Therefore, the reception interval threshold value Tr is calculated by Expression (13) when a reception interval threshold value of the network relay apparatus, to which the transmission source communication apparatus having a smaller number of stages of network relay apparatuses is connected, is represented as Trmin.

$$Tr=Trmin \qquad (13)$$

As in the communication apparatus 123c and the communication apparatus 123e shown in Fig. 1, when the positions in the network are different but the numbers of stages of the network relay apparatus 121 are the same, collision occurs in the network relay apparatus 120b closest to both the communication apparatuses, that is, in a second stage from the communication control apparatus 120 in a communication route common to the communication apparatus 123c and the communication apparatus 123e. Therefore, as the reception interval threshold value, a reception interval threshold value of the network relay apparatus 121b is used.

In this way, when the positions in the network of the transmission source communication apparatuses 123 of the colliding two synchronization packets are different but the numbers of stages of the network relay apparatuses are the same, the reception interval threshold value Tr can be set according to Expression (14) when a reception interval threshold value of a network relay apparatus closest to both the communication apparatuses, that is, having the largest number of stages counted from the communication control apparatus 120 is represented as Trcommon.

$$Tr=Trcommon \qquad (14)$$

(Determining means for queuing occurrence)

Determining means for queuing occurrence in the queuing occurrence determination unit 135 shown in Fig. 3 is explained.

In this embodiment, if packets do not collide in the network relay apparatus 121, an actual packet reception interval T measured by the reception interval measurement unit 134 shown in Fig. 3 is longer than the reception interval threshold value Tr explained above. Therefore, when T satisfies a relation of Expression (15), the queuing occurrence determination unit 135 determines that collision of packets has not occurred in the network relay apparatus 121. When T does not satisfy the relation of Expression (15), the queuing occurrence determination unit 135 determines that collision has occurred in the network relay apparatus 121.

$$T > Tr + \alpha \qquad (15)$$

Note that α in Expression (15) represents a margin and is set as appropriate for each of individual networks.

(Functional configuration of the communication apparatus)

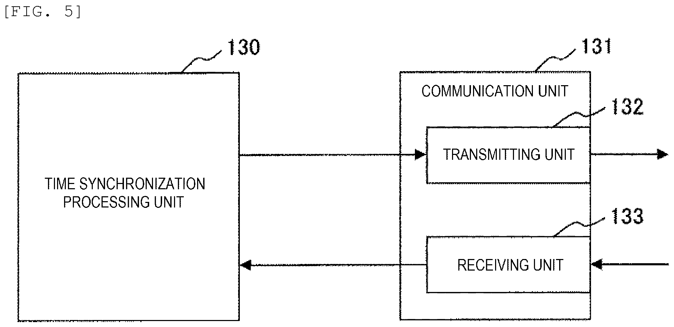

Fig. 5 shows a functional configuration diagram of the communication apparatus 123.

Like the communication control apparatus 120, the communication apparatus 123 includes the time synchronization processing unit 130 and the communication unit 131 including the transmitting unit 132 and the receiving unit 133. The time synchronization processing unit 130 executes a time synchronization protocol on the basis of data of packets communicated between the time synchronization processing unit 130 and the communication control apparatus 120 via the communication unit 131. Note that, when the master/slave configuration is adopted as in the IEEE1588, the communication control apparatus 120 is a master and the communication apparatus 123 is a slave.

(Synchronization processing operation in the communication control apparatus)

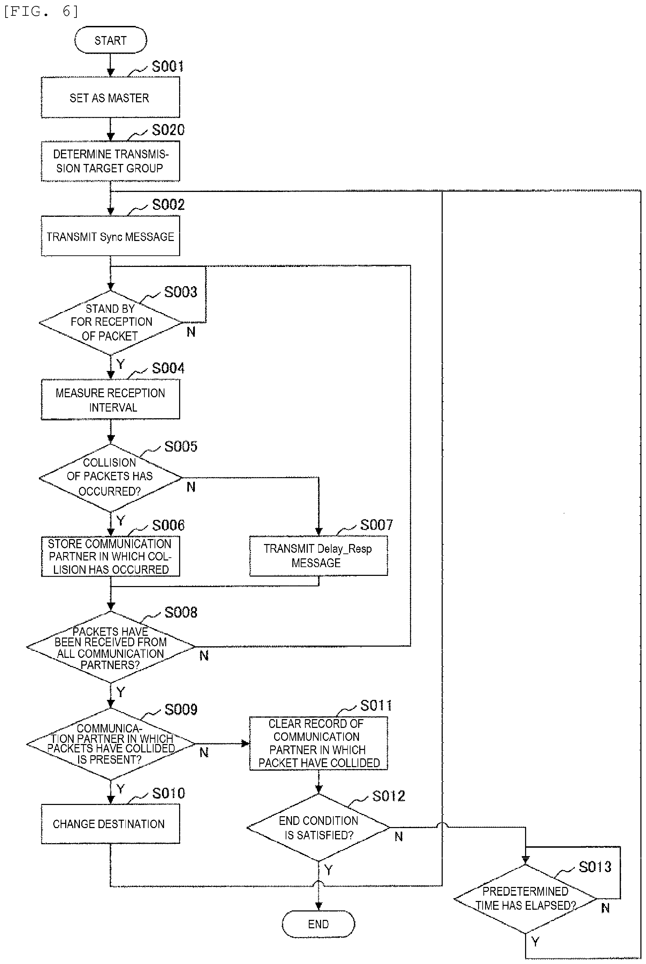

Fig. 6 is a flowchart showing synchronization processing operation in the communication control apparatus 120 in this embodiment in the case in which an IEEE1588 protocol (see Figs. 14 and 15 and the description of the "background") is executed as a time synchronization protocol.

First, the communication control apparatus 120 is set as a master (S001). In the IEEE1588, information (an Announce message) is exchanged between the communication control apparatus 120 and the communication apparatuses 123 according to a best master clock (hereinafter abbreviated as BMC) algorithm. It is determined according to content of the information whether the communication control apparatus 120 becomes a master or a slave. In this embodiment, parameters of the communication control apparatus 120 and the communication apparatuses 123 are set in advance such that the communication control apparatus 120 becomes the master. For example, priority of the information is increased such that the communication control apparatus 120 becomes the master. Note that the configuration of the communication apparatus 123 may be set the same as the communication control apparatus 120 (see Fig. 3) without separately setting parameters in the BMC. In this case, an apparatus that has become the master as a result of executing the BMC algorithm is the communication control apparatus 120 and an apparatus that has become the slave as a result of executing the BMC algorithm is the communication apparatus 123.

Subsequently, in step S020, the time synchronization processing unit 130 inquires the group configuring unit 150 about a transmission target group. The group configuring unit 150 notifies the time synchronization processing unit 130 of an identifier of the communication target group.

Note that information notified to the time synchronization processing unit 130 by the group configuring unit 150 is not limited to the identifier of the group and may be an identifier of one or a plurality of communication apparatuses 123. For example, when the number of the communication apparatuses 123 outside certain one group is small (e.g., one), identifier of the respective communication apparatuses 123 may be set as notification information without configuring a group with the small number of communication apparatuses 123 and defining an identifier.

An identifier of a group managed by the group configuring unit 150 and a group configuring method are explained below.

Subsequently, in step S002, the time synchronization processing unit 130 transmits a Sync message including information concerning transmission time (t1 in Fig. 15) to the communication apparatus 123 in multicast according to the protocol of the IEEE1588 using the identifier of the group notified from the group configuring unit 150 in the preceding step S020. Note that, in the specifications of the IEEE1588, a two step mode is defined in which a Follow_Up message is transmitted after the transmission of the Sync message. In the operation shown in Fig. 6, a one step mode for transmitting only the Sync message is applied. However, the two step mode can be applied in the same manner.

Subsequently, the communication control apparatus 120 stands by for reception of a Delay_Req message from the communication apparatus 123 (S003). When receiving the Delay_Req message, the reception interval measurement unit 134 measures a reception interval between the Delay_Req message and a packet received immediately before the Delay_Req message (S004). Note that a reception interval between a packet received first and a packet received immediately before the packet cannot be measured. However, the reception interval only has to be set to 0. The queuing occurrence determination unit 135 only has to determine that collision has not occurred.

Subsequently, the queuing occurrence determination unit 135 determines whether collision of packets has occurred (S005). Specific determining means is the comparison of the measured reception interval and the reception interval threshold value as explained above. When it is determined that collision of packets has occurred (Y in S005), information concerning a communication apparatus, which is a communication partner of the colliding packets is stored (S006). The information concerning the communication partner may be an IP address or may be an identifiable identifier (a domain) on the IEEE1588. When it is determined that collision of packets has not occurred (N in S005), the time synchronization processing unit 130 transmits a Delay_Resp message including information concerning reception time (t4 in Fig. 15) and continues the execution of the time synchronization protocol (S007).

After the processing operation execution in step S006 or S007, the time synchronization processing unit 130 determines whether packets have been received from all communication partners (S008) . When it is determined that packets have not been received from all the communication partners (N in S008), the time synchronization processing unit 130 returns to step S003 and stands by for reception of packets. When it is determined that all the packets have been received (Y in S008), the time synchronization processing unit 130 determines whether a communication partner in which the collision has occurred is present, that is, the communication partner stored in step S006 is present (S009) . Note that, assuming that a packet loss occurs halfway, the time synchronization processing unit 130 may proceed to step S010 when a predetermined time has elapsed.

When it is determined in step S009 that the communication partner in which the collision has occurred is present (Yin S009), a delay due to queuing has occurred in the network relay apparatus 121. In this case, the time synchronization processing unit 130 executes the time synchronization protocol again. At this point, when the time synchronization processing unit 130 transmits a Sync message in multicast in the same manner as the Sync message transmitted first, all the communication apparatuses 123 returns Delay_Req messages again. It is likely that packets collide in the network relay apparatus 121 again. Therefore, it is desirable to perform communication with the specific communication partner in which the packets are determined as having collided or perform communication by limiting a destination to a group including at least the communication partner in which the packets are determined as having collided. For example, unicast communication for communicating with only a specific communication partner or multicast communication defining another multicast address is applied. Grouping by a VLAN is applied using the network relay apparatus 121 adapted to a VLAN function. The time synchronization processing unit 130 changes the destination of the communication partner through the unicast communication, the multicast communication, or the grouping (S010). Then, the time synchronization processing unit 130 returns to step S002, transmits a Sync message again, and executes the time synchronization protocol again.

When it is determined in step S009 that the communication partner in which the collision has occurred is absent (N in S009), the time synchronization processing unit 130 clears a record of the communication partner in which the packets have collided (S011). Thereafter, it is determined whether an end condition is satisfied (S012). If the end condition is satisfied (Y in S012), the communication control apparatus 120 ends the processing operation in Fig. 6. If the end condition isnotsatisfied (N in S012), the communication control apparatus 120 stays on standby for a predetermined time (S013). Thereafter, the communication control apparatus 120 returns to step S002 and executes the time synchronization protocol again (S002). Examples of the end condition include a user or a system administrator explicitly setting the end or setting a condition using an elapsed time after system operation or the number of times of execution of the time synchronization protocol.

Note that, in the synchronization processing operation in Fig. 6, the time synchronization protocol is executed again on the communication partner in which the packets are determined as having collided. However, the time synchronization protocol does not have to be executed again. In this case, the communication control apparatus 120 executes predetermined processing assuming that time synchronization with the communication apparatus 123 has failed. Examples of such predetermined processing include notifying the failure of the time synchronization and the identifier of the communication apparatus 123 to a predetermined destination and presenting the failure of the time synchronization and the identifier of the communication apparatus 123 to the outside with predetermined presenting means (display by a monitor connected to the communication control apparatus 120, presentation by an LED or the like included in the communication control apparatus 120, output of alarm sound, or the like).

In the synchronization processing operation in Fig. 6, it is also possible to measure time from the transmission of the Sync message until the reception of the first Delay_Req message and, when the time exceeds a predetermined value, determine that collision has occurred in the first Delay_Req message, and execute the time synchronization protocol again with the communication partner of the Delay_Req message. As such a predetermined value, a measurement value obtained when time until the reception of the Delay_Req message is experimentally measured without generating other communication flows may be used.

Concerning the standby time in step S013 in Fig. 6, the standby time may be set such that the start timing in step S002 becomes a predetermined cycle or the standby time may be changed every time. For example, if the number of times of the shift from step S010 to step S002, that is, the number of times of collision is large, time in which the communication apparatus 123 synchronized first operates without being synchronized increases. Therefore, it is desirable to set the standby time in step S013 rather short such that the time synchronization processing operation is executed as early as possible. If the number of times of the shift from step S010 to step S002 is small, it can be estimated that the communication apparatuses 123 are synchronized relatively highly precisely. Therefore, the standby time in step S013 may be set rather long.

(Identification of the group)

The identifier of the group managed by the group configuring unit 150 shown in Fig. 3 is explained.

The identifier of the group is represented using a domain defined by the IEEE1588 or a multicast address defined by a communication protocol such as a VLAN (Virtual LAN) in IEEE8 02.1Q, an IP (Internet Protocol), or IEEE802.3. Note that, besides, any means capable of communicating with a plurality of communication terminals on the basis of a communication protocol on a network may be used.

<Identification by the domain of the IEEE1588>

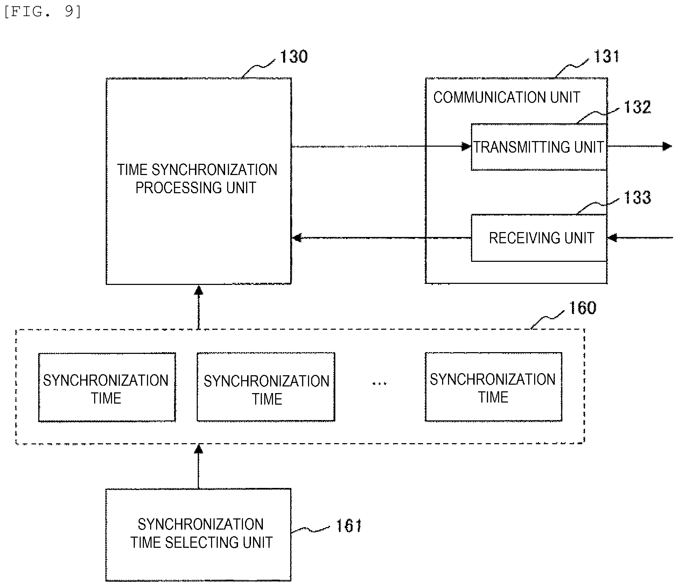

A functional configuration example of the communication apparatus 123 using the domain of the IEEE1588 standard is shown in Fig. 9. In the IEEE1588, it is possible to independently define operation and a time scale on a protocol using the domain. In the case of this embodiment, synchronization time is managed for each of domains in the communication apparatus 123. Therefore, a synchronization time selecting unit 161 selects one synchronization time from a plurality of synchronization times 160.

A reference based on which the synchronization time selecting unit 161 selects the synchronization time 160 may be selected on the basis of an identifier of the synchronization time 160 or may be selected on the basis of an execution state of a synchronization time protocol or an attribute (time accuracy, etc.) of a master of the IEEE1588 of a relevant domain. For example, the synchronization time 160 of a domain having a high execution frequency of the synchronization time protocol or a domain having the highest time accuracy of the master is selected.

As means for multiplexing domains in one communication apparatus 123 and communicating with the communication control apparatus 120, the means may be configured by route control information of the network relay apparatus 121 (e.g., switching a route for each of domains) or a domain number of an IEEE1588 packet may be identified in the communication apparatus 123.

<Identification by the VLAN>

VLANs configured by one or more of the plurality of communication apparatuses 123 and the communication control apparatus 120 are set by the number of groups to be defined.

In step S002 in Fig. 6, the time synchronization processing unit 130 of the communication control apparatus 120 sets, in tags of VLANs, identifiers (VIDs) of the VLAN notified from the group configuring unit 150 in step S020 in the figure and transmits a Sync message.

In this case, the network relay apparatus 121 corresponding to a VLAN function is used. Further, before the communication control apparatus 120 executes the operation in Fig. 6, groups identified by the VLANs are set in the network relay apparatuses 121 in advance.

<Identification by the multicast address>

A multicast address is defined for each of groups. Setting for realizing the multicast address is implemented on the network relay apparatuses 121, the communication apparatuses 123, and the communication control apparatus 120 using an IGMP (Internet Group Management Protocol) or the like.

(Group configuring means)

Group configuring means in the group configuring unit 150 is explained. Note that groups are desirably configured such that a collision probability of packets in the network relay apparatus 121 in a network is as low as possible.

<Group configuration by delay information>

Groups can be configured on the basis of a communication delay between the communication control apparatus 120 and the network relay apparatuses 121. At a preparation stage of prior system construction, if a time synchronization protocol such as the IEEE1588 is executed in a one-to-one relation between the communication control apparatus 120 and the communication apparatuses 123, a communication delay can be calculated by means shown in Fig. 14 and Fig. 15.

<Group configuration by a network configuration>

Groups may be configured on the basis of the configuration of a network. For example, groups can be configured on the basis of the number of the network relay apparatuses 121 present between the communication control apparatus 120 and the communication apparatuses 123 and communication performance among the network relay apparatuses 121 (e.g., 10 Mbps, 100 Mbps, 1 Gbps, and the like serving as communication throughputs of the IEEE802.3, a type of a communication medium indicating whether communication is wired communication or wireless communication, and a type of a communication standard).

<Group configuration by an evaluation value>

As explained above, groups can be configured using predetermined indexes, for example, communication delays calculated for the communication apparatuses 123 on the basis of the delay information or the configuration of the network. In this case, the groups are configured such that the groups are configured in a predetermined number of groups and the communication apparatuses 123 having the same index are divided into different groups.

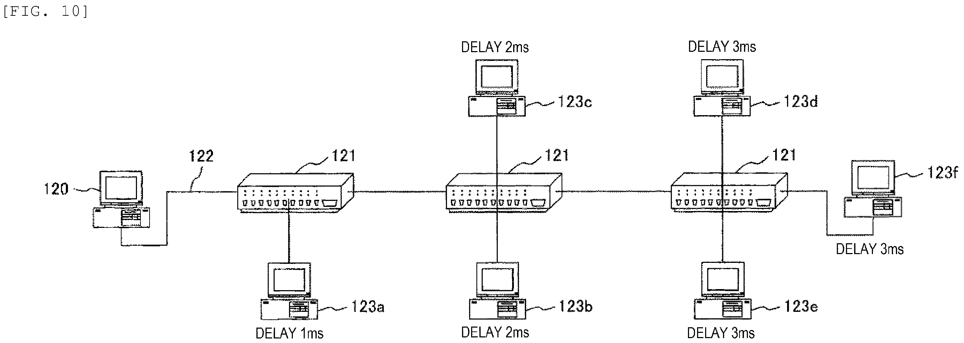

Fig. 10 shows a group configuration example based on communication delays. Communication delays between the communication apparatuses 123a to 123f and the communication control apparatus 120 are respectively 1ms, 2ms, 2ms, 3ms, 3ms, and 3ms. When the number of groups is three, for example, the communication apparatuses 123a to 123f are grouped as (123a, 123c, 123d), (123b, 123e), and (123f).

When the number of groups is two, for example, the communication apparatuses 123a to 123f are grouped as (123a, 123c, 123d) and (123b, 123e, and 123f) . However, in this case, compared with the example in which the number of groups is three, a probability of collision of return packets of the communication apparatus 123d and the communication apparatus 123e increase. It is highly likely that a re-synchronization procedure is executed concerning one of the communication apparatuses.

<Group configuration based on a result of the last synchronization processing>

Groups may be configured on the basis of the last synchronization processing result. For example, groups can be configured by selecting every other communication apparatuses in time series order from the communication apparatuses 123 in which synchronization packets are determined as having collided in the last time synchronization processing. Alternatively, when the number of the remaining communication apparatuses 123 that cannot be time-synchronized as a result of the last time synchronization procedure is equal to or smaller than a predetermined number, one communication apparatus 123 may be selected from the remaining communication apparatuses 123. This is because, if there is no problem in requested performance of a system, it is easier to execute the synchronization processing for each of the communication apparatuses 123.

The group configuring means based on the result of the last time synchronization processing and group configuring means shown in Fig. 10 may be combined. As an example, groups including all of the groups of the communication apparatuses 123 in the groups configured on the basis of the last synchronization processing result may be presented to the time synchronization processing unit 130 from group candidates configured by the group configuring means in Fig. 10. For example, when the communication apparatus that cannot be time-synchronized last time are the communication apparatuses 123b and 123f and time synchronization is already established with the communication apparatus 123e, a group (123b, 123e, 123f) is presented.

(Execution timing of the group configuration)

Execution timing of the group configuration may be set at a preparation stage before actual operation time concerning time synchronization communication and a system application or may be dynamically set according to information available during system operation.

(Estimation of network configuration information)

Estimation of a network configuration by the network configuration information estimating unit 152 shown in Fig. 3 is explained.

The network configuration information estimating unit 152 transmits a synchronization packet or a packet of another communication protocol to the network 122 and estimates the configuration of the network 122 by reviewing a response to the synchronization packet or the packet. For example, the network configuration information estimating unit 152 can estimate the number of the communication apparatuses 123 adapted to the synchronization protocol by broadcasting the synchronization packet and observing transmission source identifiers on response packets and the number of the response packets.

In estimating means in this embodiment, Expression (16) is used.

$$M=R/\beta \qquad (16)$$

where, M represents an estimated number of stages, R represents a response time, and $\beta$ represents a transfer delay per one stage. $\beta$ may be experimentally calculated offline or may be statistically calculated from response times to the plurality of communication apparatuses 123. For example, when a communication load of a network is low, a response time to a certain communication apparatus 123 concentrates near a specific value. Therefore, if the number of stages of the network relay apparatuses 121 is different one stage, a difference between two concentrated values can be estimated as a transfer delay for one stage of the network relay apparatus 121. Alternatively, it is also possible to experimentally calculate a relation between the number of stages and response times of the stages shown in Fig. 8 and estimate the number of stages from the relation. Alternatively, a communication protocol capable of measuring the number of stages may be used. For example, in the IP (Internet Protocol), according to a parameter for reducing one every time of passage through a relay apparatus called TTL (Time to Live), it is possible to calculate the number of stages of the network relay apparatuses 121 if a value of the TTL acquired on a reception side (the communication apparatuses 123) is returned to the communication control apparatus 120.

When the communication control apparatus 120 transmits a synchronization packet to the communication apparatuses 123 a plurality of times and the order of reception of responses to the synchronization packets by the communication control apparatus 120 sometimes changes, it is estimated that the transmission source communication apparatuses 123 of the two response packets have the same network relay apparatus 121 or a shared route.

The estimation of the network configuration explained above may be periodically executed or may be executed only during a system startup or during a test or during predetermined event occurrence. When the estimation is executed periodically, the estimation may be executed independently from the communication of the synchronization packets or may be executed in order. Examples of events in the case in which the estimation is executed during the predetermined event occurrence include a change of the number of the communication apparatuses 123 and a change of a communication route or communication connection in the network 122. The latter can be detected by an LLDP (Link Layer Discovery Protocol) or an RSTP (Rapid Spanning Tree Protocol) .

(Modification of the functional configuration of the communication control apparatus)

In the functional configuration of the communication control apparatus 120 shown in Fig. 3, when groups of transmission partners of synchronization packets do not have to be configured, the communication control apparatus 120 does not have to include the group configuring unit 150. In this case, step S020 shown in Fig. 6 is not executed and the time communication control apparatus 120 shifts from step S001 to step S002. When a history of collision determination results does not have to be stored, the communication control apparatus 120 does not include the determination result history storage unit 137. Similarly, when the configuration of the network 122 does not have to be estimated, the communication control apparatus 120 does not have to include the network configuration information estimating unit 152. In this case, information concerning the configuration of the network 122 is set in the network configuration information storage unit 151 by predetermined input means (e.g., keyboard operation). Note that, in the embodiment, in order to set information concerning the network configuration information storage unit 151, the network configuration information estimating unit 152 and the predetermined input means may be concurrently used.

(Other modifications)

<Case 1 in which another communication flow is present>

When a communication flow other than the time synchronization processing is present, a reception interval of packets is likely to change. In this case, the network configuration information storage unit 151 stores information concerning the other communication flow, whereby the queuing occurrence determination unit 135 can determine collision of packets in the network relay apparatus 121.

<Case 2 in which another flow is present>

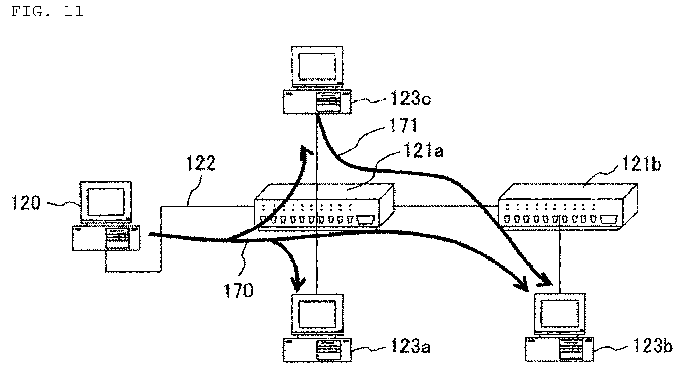

A case in which another communication flow occurs between the communication apparatuses 123 and the communication flow collides with a time synchronization packet (a Sync message) transmitted from the communication control apparatus 120 to the communication apparatus 123 is shown in Fig. 11. In Fig. 11, a communication flow 171 from the communication apparatus 123c to the communication apparatus 123b is present and a communication flow 170 of a time synchronization protocol from the communication control apparatus 120 to the communication apparatus 123b is present. At this point, a Sync message of the communication flow 170 of the time synchronization protocol is likely to collide with a packet of the communication flow 171 in the network relay apparatuses 121a and 121b. Communication delays in a forward path and a backward path in the communication flow 170 of the time synchronization protocol are likely to be different. In such a case, in the communication apparatus 123c, a system for transmitting the packet of the communication flow 171 to the communication apparatus 123b after receiving the Sync message is used. Consequently, it is possible to avoid collision of packets in the network relay apparatuses 121.

(Statistical method combination)

Means for carrying out statistical processing on a history of communication delays obtained in the process of the synchronization protocol processing and determining processing content is explained.

Communication delays between the communication control apparatus 120 and the communication apparatuses 123 are calculated a plurality of times in processing shown in Fig. 14 to calculate an average, a distribution, a minimum, a maximum, and the like of the communication delays. Predetermined threshold values are set from calculation results of the average, the distribution, the minimum, the maximum, and the like. For example, an upper limit value and a lower limit value of a desired section in the case in which a mathematical model of a minimum, a maximum, a normal distribution, or the like is assumed are set as threshold values. These threshold values may be calculated taking into account the number of stages of the network relay apparatuses 121.

Examples of adaptive processing in the case in which communication delays are within a range of the threshold values (not regarded as valid) include not transmitting synchronization packets such as Sync and Delay_Req, transmitting invalid synchronization packets, and not synchronizing using time information of a Sync packet when Sync is received. Note that the communication delays may be calculated by performing test measurement in a state of no load to the network 122 in order to improve accuracy.

(Domain division)

Division of a time synchronization range is explained.

In Fig. 11, the communication control apparatus 120 and the communication apparatuses 123a and 123c are set as one time synchronization range (referred to as domain "a") and the communication apparatuses 123c and 123b are set as another time synchronization range (referred to as domain "b"). The communication apparatus 123c becomes a synchronization slave (the communication control apparatus 120 is a synchronization master) in the domain "a" and becomes a synchronization master in the domain "b". With such a configuration, the communication control apparatus 120 does not have to transmit a synchronization packet to the communication apparatus 123b. Therefore, collision of synchronization packets in the network relay apparatus 121a does not occur.

Note that the domain "a" and the domain "b" may be configured using domains of the IEEE1588 or may be configured using a VLAN function of the network relay apparatus 121.

(Application to the network relay apparatus)

The network relay apparatus 121 can be configured to fix, when packets collide, a transmission interval of the colliding packets. That is, when a first packet is transferred, during transfer of a second packet to the same transfer destination, when one of the first packet and the second packet is a synchronization packet, the first packet is transferred at a predetermined transmission interval after the second packet is transferred. Consequently, a reception interval of a packet in the communication control apparatus 120 is equal to the fixed transmission interval of the network relay apparatus 121. Therefore, the reception interval threshold value determination unit 136 can easily set a reception interval threshold value according to Expression (17). A processing load of the communication control apparatus 120 can be reduced.

$$Tr=Ts \qquad (17)$$

where, Ts represents a transmission interval during packet collision in the network relay apparatus 121.

The transmission interval Ts may be set by predetermined input means or may be acquired by predetermined checking means from the outside. Note that, as the input means and the checking means, network communication may be used. The transmission interval Ts may be set as a difference with respect to the IFG defined in the network 122.

As the packets set to the transmission interval Ts, one or both of the colliding packets may be limited to synchronization packets. Since the transmission interval during the packet collision is set as Ts, a minimum interval between transfer packets is Ts.

Control of functions for fixing the transmission interval during collision to Ts (validation and invalidation) may be set by predetermined means from the outside . The setting means includes network communication and a software defined network.

Note that, to prevent the transmission interval frombeing set to Ts in a non-colliding state, during transfer of a packet, when a preceding packet is absent in a buffer of the network relay apparatus 121, the packet may be transmitted such that a transmission interval between the packet and the preceding packet is always larger than Ts.

The network 122 may be configured using a transparent clock defined by the IEEE1588 standard.

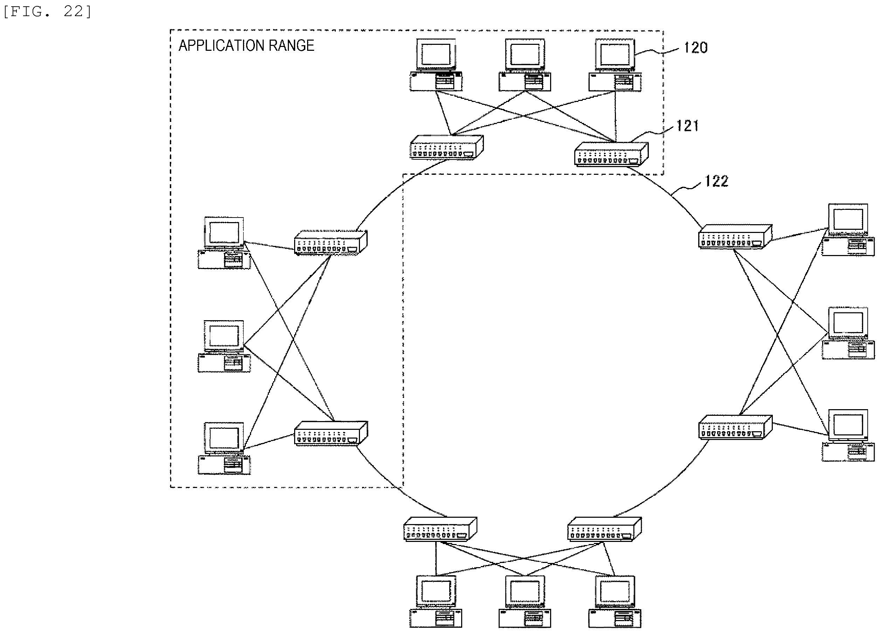

Further, as shown in Fig. 22, this embodiment may be applied to a part of a ring network. The ring network is, for example, an RPR (Resilient Packet Ring) of IEC62439 or IEEE802.17 including HSR (High Availability Seamless Redundancy).

(Effect of the first embodiment)

According to the first embodiment explained above, the communication control apparatus 120 can determine presence or absence of collision of packets in the network relay apparatuses according to a reception interval of response messages of the time synchronization protocol. When collision of packets occurs, the communication control apparatus 120 executes the time synchronization procedure again. When collision of packets does not occur, the communication control apparatus 120 continues the time synchronization protocol. This enables execution of the time synchronization protocol even in a network configuration in which the network relay apparatus 121 is used. Therefore, it is possible to establish a system in which times are synchronized among a plurality of communication apparatuses that share a network. It is possible to construct a large time synchronization system by relaying and extending the network via the network relay apparatuses.

Further, according to this embodiment, it is possible to configure a time synchronization system using ordinary apparatuses conforming to the standard such as the IEEE1588 without using special communication apparatuses and special relay apparatuses in all the communication apparatuses.

According to this embodiment, a threshold value of collision determination is determined taking into account network configuration information. Therefore, it is possible to highly precisely perform synchronization according to a network configuration.

Second Embodiment

As explained below, the communication apparatus 123 in this embodiment include functions different from the functions of the communication apparatus in the first embodiment. Note that, in figures referred to below, components denoted by reference numerals and signs same as the reference numerals and signs in the figures referred to above are components same as the components explained concerning the first embodiment unless specifically noted otherwise.

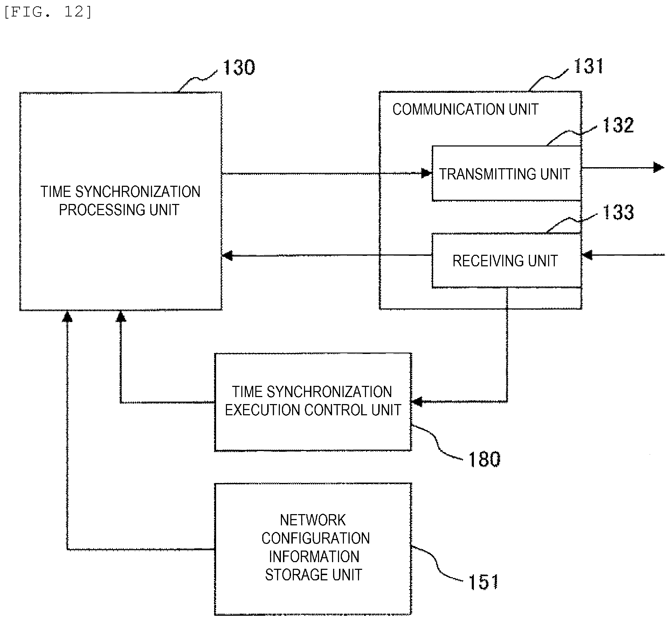

Fig. 12 shows a functional configuration of the communication apparatus 123 in the second embodiment of the present invention.

A time synchronization execution control unit 180 controls transmission timings of packets of the time synchronization processing unit 130. The control of the transmission timings may be based on information notified from the communication control apparatus 120 or may be based on the operation of the time synchronization processing unit 130.

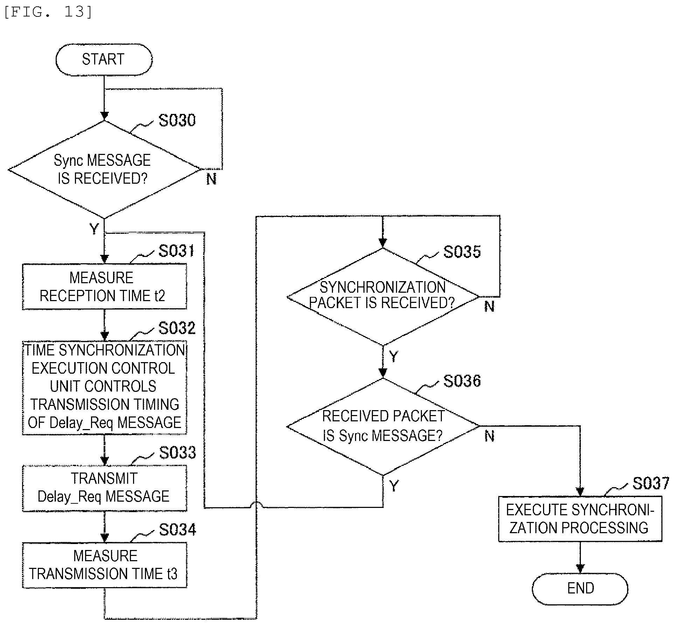

A processing operation of the communication apparatus 123 is shown in Fig. 13.

First, the communication apparatus 123 stays on standby until the communication apparatus 123 receives a Sync message (S030). If the communication apparatus 123 receives a Sync message, the communication apparatus 123 measures and stores reception time t2 (S031). Subsequently, the time synchronization execution control unit 180 controls transmission timing of a Delay_Req message (S032) . Specifically, the time synchronization execution control unit 180 puts transmission on standby for a predetermined time. After the predetermined time elapses, the communication apparatus 123 transmits the Delay_Req message (S033). Subsequently, the communication apparatus 123 measures and stores transmission time t3 (S034). Subsequently, the communication apparatus 123 stands by for reception of a synchronization packet (S035). The communication apparatus 123 receives a synchronization packet and determines whether the received packet is a Sync message (S036) . If the received packet is the Sync message (Y in S036), the communication apparatus 123 estimates that time synchronization processing is executed again by the communication control apparatus 120 and returns to step S031. If the received synchronization packet is not the Sync message (N in S036), the communication apparatus 123 executes synchronization processing (S037). The synchronization processing is as shown in Figs. 14 and 15. The communication apparatus 123 is synchronized with the communication control apparatus 120 on the basis of time (transmission time of a master) in the Sync message or a Follow_Up message, time (reception time of a Delay_Req message in the master) in the Delay_Resp message, and t2 and t3 described above.

(Transmission timing control for the Delay_Req message)

In this embodiment, as explained above, time from the reception of the Sync message until the transmission of the Delay_Req message by the communication apparatus 123 is controlled by the time synchronization execution control unit 180. Therefore, it is possible to reduce a collision probability of synchronization packet of the other communication apparatuses 123.

The communication control apparatus 120 may determine a standby time until the transmission of the Delay_Req message on the basis of notified information or the communication apparatus 123 itself may determine the standby time. The communication control apparatus 120 controls the standby time of the time synchronization execution control unit 180 with a reception interval of the Delay_Req packet. If the communication control apparatus 120 determines from the reception interval in the communication control apparatus 120 that packets have collided, the communication control apparatus 120 increases or reduces, by a predetermined time, the standby time of the communication apparatus 123 in which the packets have collided.

Alternatively, in the IEEE1588, a transmission cycle of a Delay_Req message of a slave can be controlled by a master on the basis of a transmission cycle of Sync. Specifically, the master causes the slave to transmit the Delay_Req message once in a predetermined cycle for transmitting a Sync message. When the communication control apparatus 120 determines that packets have collided by using this specification, the communication control apparatus 120 increases or reduces a transmission frequency of the Delay_Req message of the communication apparatus 123 in which the packets have collided.

If the communication apparatus 123 receives the Sync message after the Delay_Req transmission, the communication apparatus 123 can estimate that the communication control apparatus 120 have determined that the packets have collided and executed the time synchronization procedure again. Therefore, when receiving the Sync message after the Delay_Req message transmission, the communication apparatus 123 increases or reduces, with the time synchronization execution control unit 180, the standby time by the predetermined time. Alternatively, the communication control apparatus 120 may explicitly notify the communication apparatus 123 that the collision of the packets has been detected.

Note that all the communication apparatuses 123 in the network may include the time synchronization execution control units 180 or only a part of the communication apparatuses may include the time synchronization execution control units 180. In both the cases, a packet collision probability can be reduced. Identifiers of the communication apparatuses 123 including the time synchronization execution control units 180 are desirably stored in the network configuration information storage unit 151. Consequently, the communication control apparatus 120 can transmit a command of a standby time to the time synchronization execution control units 180 of the relevant communication apparatuses 123 according to the identifiers of the communication apparatuses 123 stored in the network configuration information storage unit 151.

(Group selection information embedding in the Delay_Req message)

In the second embodiment, information necessary for the Sync message transmitted by the communication control apparatus 120 in executing the time synchronization again is embedded in the Delay_Req message transmitted from the communication apparatus 123. As such information, there are, for example, the identifier of the communication apparatus 123 at a destination of the Sync message and group information of a transmission target determined in step S020 in Fig. 6. For example, domain information of the IEEE1588 specifications to which the communication apparatus 123 belongs is carried in the Delay_Req message. When the communication control apparatus 120 determines that a packet from the communication apparatus 123 collides, the communication control apparatus 120 transmits the Sync message again using the domain information shown in the Delay_Req message. Consequently, the communication control apparatus 120 can transmit the Sync message in a short time without inquiring the group configuring unit 150 about a transmission target group. In this case, the communication control apparatus 120 desirably notifies group configuration information such as domain information to the communication apparatus 123 in advance.

(Delay_Req message returning timing control of the communication apparatuses other than the own apparatus)

In the second embodiment, the communication apparatus 123 controls return timing of the Delay_Req message of the communication apparatus 123 and controls Delay_Req message return timings of the other communication apparatuses 123. Note that not only the communication apparatus 123 but also a dedicated apparatus or the network relay apparatus 121 may control the return timings of the communication apparatuses 123.

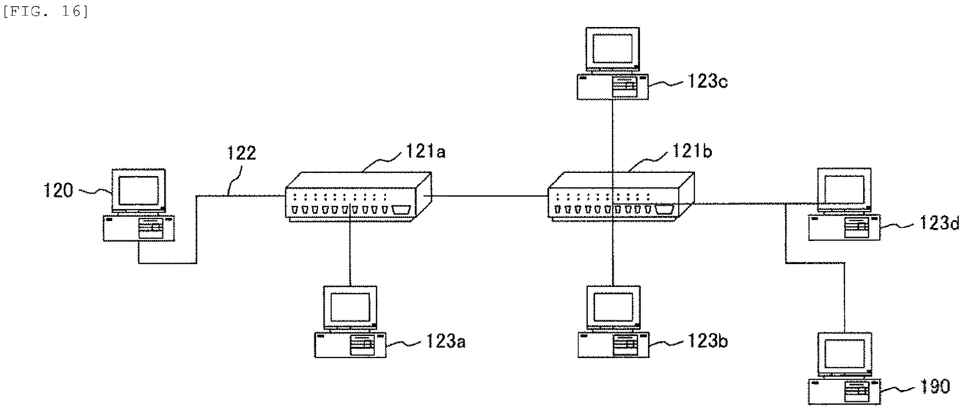

A system example in which a time synchronization control apparatus 190 is used is shown in Fig. 16. Note that, for convenience of explanation, a communication apparatus that controls return timings of packets for time synchronization of the communication apparatuses other than the own apparatus is described as time synchronization control apparatus 190.

The time synchronization control apparatus 190 monitors packets on the network. If time synchronization packets collide and the time synchronization control apparatus 190 detects the communication apparatus 123 that is executing time synchronization processing, the time synchronization control apparatus 190 delays or quickens a reply of the communication apparatus 123 for a predetermined time. Alternatively, the communication control apparatus 120 may explicitly notify the time synchronization control apparatus 190 that the packet for time synchronization collides.

The time synchronization control apparatus 190 executes the monitoring of packets by, for example, setting the receiving unit 133 to a promiscuous mode to receive packets on the network. When the time synchronization control apparatus 190 confirms the Sync message to the same communication apparatus 123 after confirming the Delay_Req message, the time synchronization control apparatus 190 estimates that the communication control apparatus 120 has determined that packets have collides and executed the time synchronization processing again and determines that collision of the time synchronization packets has occurred.

Examples of means for controlling return timings of the other communication apparatuses 123 include using a PAUSE frame in the IEEE802. 3 to stop transmission of the other communication apparatuses 123 for a predetermined time and using a dedicated protocol. When the dedicated protocol is used, a communication partner and time information (a standby time, time for reply, etc.) for controlling return timing are at least used. Alternatively, the other communication apparatuses 123 may replay at a point in time when packets of the dedicated protocol are received. In this case, the communication apparatuses 123 desirably do not execute reply processing until the dedicated protocol packets are received.

The time synchronization control apparatus 190 may control all the communication apparatuses 123 in the network or may control a part of the communication apparatuses 123.

Note that, when controlling return timings of the plurality of communication apparatuses 123, the time synchronization control apparatus 190 can control the return timings on the basis of attributes of the communication apparatuses 123 and synchronization processing results to that point. For example, the time synchronization control apparatus 190 sets priority degrees in the respective communication apparatuses 123 and sets standby times of the communication apparatuses 123 according to the priority degrees. Alternatively, the time synchronization control apparatus 190 may adjust the standby times according to collision frequencies of packets in the time synchronization processing to that point or adjust the standby times according to accuracies of clocks included in the communication apparatuses 123. In the former case, the time synchronization control apparatus 190 sets the standby times shorter for the communication apparatuses 123 in which collision has not occurred. In the latter case, the time synchronization control apparatus 190 sets the standby times shorter for the communication apparatuses 123 having higher clock accuracies. Note that these kinds of information used for the control are managed and stored in the network configuration information storage unit 151 in the time synchronization control apparatus 190.

(Effect of the second embodiment)

According to this embodiment, it is possible to perform highly precise time synchronization in the system in which the network relay apparatus 121 is used. Further, by controlling the transmission timings of the packets on the communication apparatus 123 side, a probability of collision of the packets is reduced. It is possible to reduce loads related to the calculation and the control of the communication control apparatus 120 in the synchronization processing.

Third Embodiment

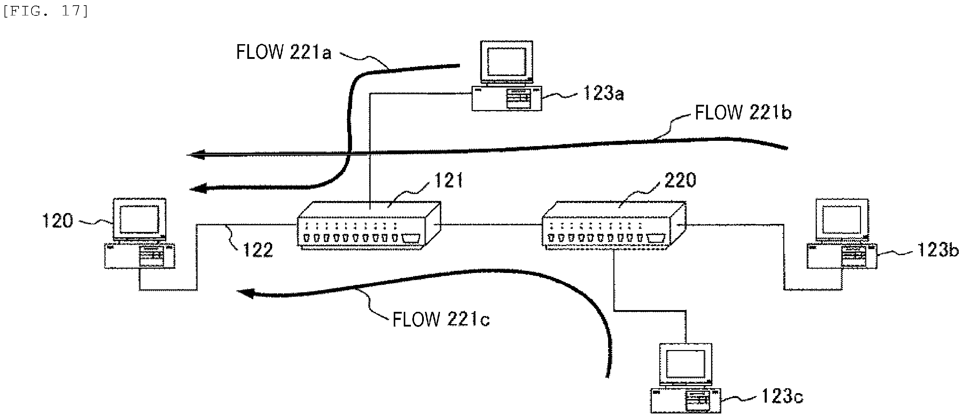

As a third embodiment of the present invention, a network configured by mixedly mounting a network relay apparatus (reference sign 220 in Fig. 17 referred to below), which is a transparent clock (hereinafter referred to as TC) defined by the IEEE1588 standard, and the network relay apparatus 121, which is a non-transparent clock, is explained. Note that, in figures referred to below, components denoted by reference numerals and signs same as the reference numerals and signs in the figures referred to above are components same as the components explained concerning the first embodiment and the second embodiment unless specifically noted otherwise.

The TC stores, in packets, processing delay information in the network relay apparatus 121. The communication apparatuses 123, which receive such packets, can calculate a difference between forward and backward delays using this information.

Fig. 17 shows a system configuration of this embodiment.

When focusing on transmission of Delay_Reqmessages from the communication apparatus 123a, the communication apparatus 123b, and the communication apparatus 123c, packets in a flow 221b and a flow 221c are likely to collide in the TC 220. Packets in a flow 221a, the flow 221b, and the flow 221c are likely to collide in the network relay apparatus 121.

However, fluctuation caused by the collision of the packets in the TC 220 is corrected by a function of the TC.

On the other hand, the network relay apparatus 121 does not include such a function because the network relay apparatus 121 is the non-TC.

In this embodiment, the communication control apparatus 120 measures a reception interval of the packets in the flow 221a, the flow 221b, and the flow 221c and determines according to Expression (15) described above whether the packets have collided.

At this point, the communication control apparatus 120 receives, after a synchronization packet in the flow 221a, one or both of the packets in the other flows 221b and 221c and, when determining according to the reception interval between the packets and the synchronization packet in the flow 221a that the packets have collided, executes the time synchronization processing again concerning the colliding flows. Similarly, the communication control apparatus 120 receives the packets in the flow 221a after one or both of the packets in the flows 221b and 221c and, when determining that the packet in the flow 221a has collided, executes the time synchronization processing again. This is because, it is estimated that the packet in the flow 221a and the packet in one of the flow 221b and the flow 221c collide in the network relay apparatus 121.

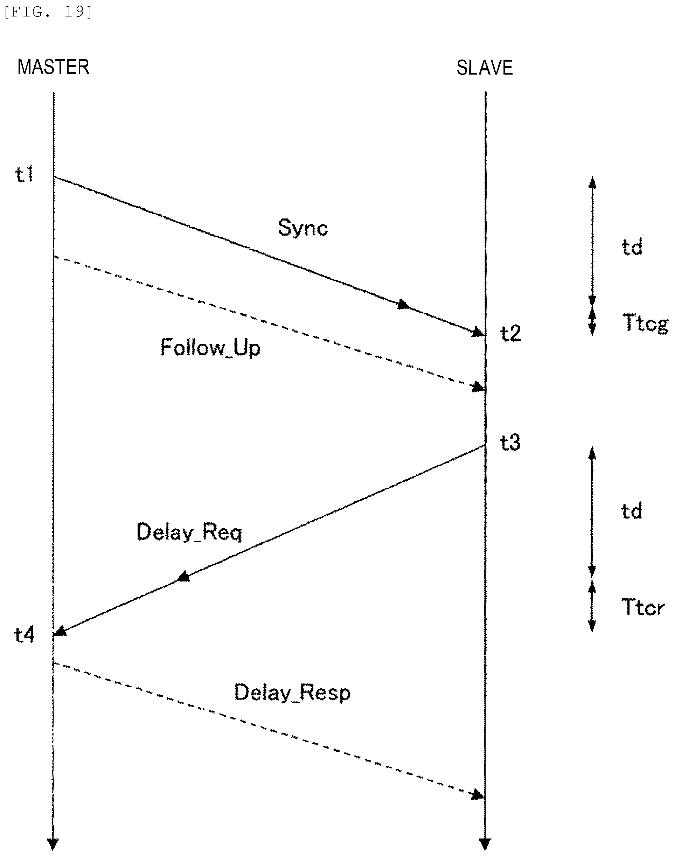

On the other hand, when one of the packets in the flows 221b and 221c collides with the other, the communication control apparatus 120 does not need to execute the synchronization processing again according to the function of the TC 220 explained above. Since a communication delay in the TC 220 can be acquired by the function of the TC 220, even if the packets collide, it is possible to perform correction on the basis of the communication delay in the TC 220. Communication delay information in the TC 220 is stored in time synchronization packets in the flows 221b and 221c. As shown in Fig. 19, when a communication delay stored in a packet of a forward path (a Sync message) is represented as Ttcg and a communication delay stored in a packet of a backward path (a Delay_Req message) is represented as Ttcr, a communication delay td of one way and a difference tdiff of time are respectively represented by Expression (18) and Expression (19) using t1, t2, t3, and t4 in the synchronization processing shown in Fig. 14 and Fig. 15.

$$td=((t4-(Ttcr+Ttcg)-t1)-(t3-t2))/2 \qquad (18)$$

$$tdiff=((t4-Ttcr+t1)-(t3+t2-Ttcg))/2 \qquad (19)$$

where, the communication delay td is a value excluding a communication delay of the TC 220. If transmission of the Sync message is multicast and there is no collision, Ttcr-Ttcg can represent a delay caused by collision in the TC 220, that is, the communication delay of the TC 220.

Note that the communication control apparatus 120 uses network configuration information such as connection order of the TC 220, the network relay apparatus 121, and the communication apparatus 123 stored in the network configuration information storage unit 151.

(Removal of the influence of another flow by the TC)

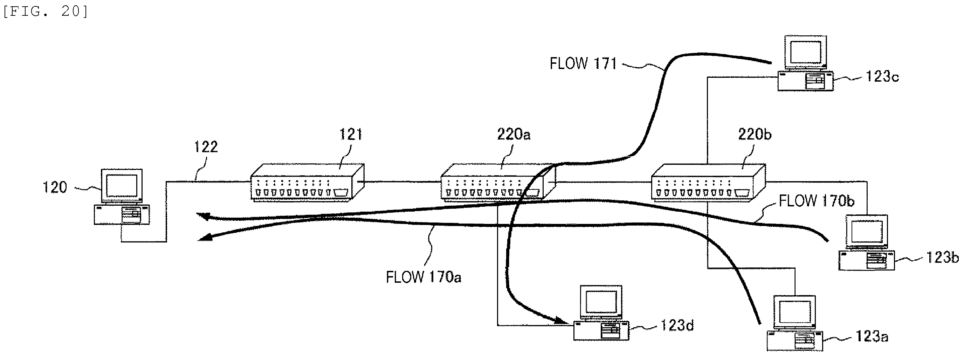

A system configuration in the case in which another flow is present is shown in Fig. 20.

In the system configuration shown in Fig. 20, flows 170a and 170b of time synchronization packets are present and, on the other hand, a flow 171 unrelated to a time synchronization flow is present along the communication apparatus 123d from the communication apparatus 123c. A packet in the flow 171 is likely to collide with packets in the time synchronization flows 170a and 120b in TCs 220a and 220b. The communication control apparatus 120 cannot detect the influence of the flow 171 on the time synchronization flow 170. Therefore, usually, time synchronization is difficult. However, as indicated by the system configuration shown in Fig. 20, by introducing the TCs 220a and 220b into a portion into which the other flow flows, delay information in the TCs 220a and 220b is stored in the time synchronization packets. Therefore, the communication control apparatus 120 only has to determine collision in the network relay apparatus 121 with means explained concerning the first embodiment without taking into account collision in the TC 220. Therefore, the communication control apparatus 120 only has to measure a reception interval of the synchronization packets in the time synchronization flows 170a and 170b and, when determining that the synchronization packet has not collided, continue the time synchronization protocol and synchronize the communication apparatuses 123a and 123b with the communication control apparatus 120 according to Expressions (18) and (19).

(Effect of the third embodiment)

According to this embodiment, overhead due to the re-execution of the time synchronization processing is reduced by using the TC. It is possible to limit introduction of the TC, which is a dedicated apparatus, by enabling introduction of a partial TC.

Fourth Embodiment

As a fourth embodiment, a network including a plurality of communication control apparatuses is explained. This embodiment intends to change a master of the IEEE1588 among the plurality of communication control apparatuses and reduce a reception interval threshold value. Note that in figures referred to below, components denoted by reference numerals and signs same as the reference numerals and signs in the figures referred to above are components same as the components explained in the first to third embodiments unless specifically noted otherwise.

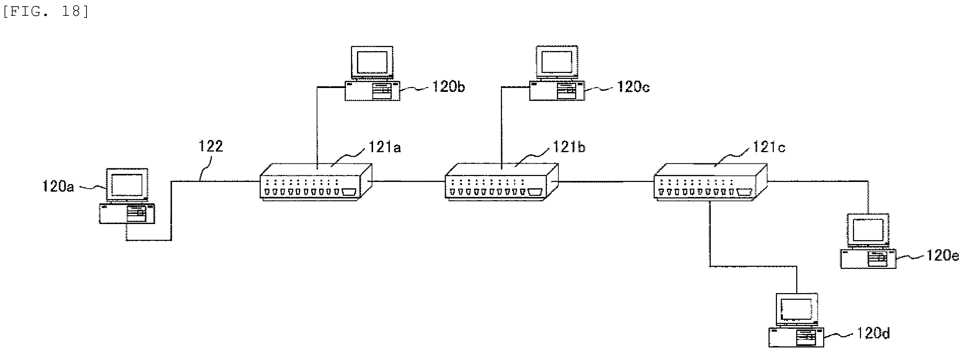

A system configuration in this embodiment is shown in Fig. 18. In the system shown in Fig. 18, all communication control apparatuses 120a to 120e, which can execute a time synchronization protocol, include the functional configuration shown in Fig. 3. A role of the master in the IEEE1588 is moved among the communication control apparatuses 120a to 120e. Note that, in this embodiment, all connecting apparatuses are the communication control apparatuses. However, not only this, but a plurality of communication control apparatuses only have to be present.

In the reception interval threshold value determination unit 136 shown in Fig. 3, the reception interval threshold value is likely to be larger as the number of steps of the network relay apparatuses 121 is larger (see Expressions (11) and (12)). Therefore, in order to reduce the reception interval threshold value, the master is selected such that a maximum of the number of stages of the network relay apparatuses 121 to the connecting apparatuses is smaller than the maximum in the case in which the other communication control apparatuses 120 are selected. Therefore, in the system shown in Fig. 18, if the communication control apparatus 120c is set as the master, a maximum number of stages can be reduced to two. Note that, if the communication control apparatus 120a is set as the master, the maximum number of stages is three, which is larger than the maximum number of stages in the case in which the communication control apparatus 120c is set as the master.

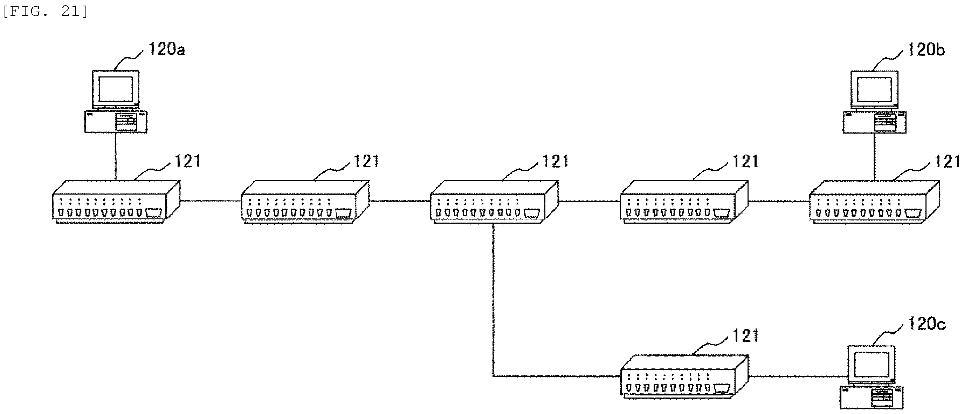

Similarly, in a system configuration shown in Fig. 21, since the reception interval threshold value depends on the number of stages in the case of a common route as indicated by Expression (14), the master is selected to reduce the number of stages of the common route. Therefore, if the communication control apparatus 120c shown in Fig. 21 is set as the master, the number of stages of the common route can be reduced to two. Note that, if the communication control apparatus 120a or 120b is set as the master, the maximum number of stages is three, which is larger than the maximum number of stages in the case in which the communication control apparatus 120c is set as the master.

In these master selecting means, when a maximum of a reception interval threshold value, which a reception interval threshold value determination unit of a certain communication control apparatus can determine, is smaller than a maximum of a reception interval threshold value, which reception interval threshold value determination units of the other communication control apparatuses can set, the communication control apparatus is selected as the master.

Note that, in the selection of the master, as explained above, a communication control apparatus having a highest (best) evaluation index among communication control apparatuses compared using a predetermined evaluation index such as a reception interval threshold value is selected. Besides, a communication control apparatus having an evaluation index higher than a predetermined level may be selected.

When the selecting means for the master is executed, a dedicated protocol for identifying the communication control apparatus 120 to be selected may be used. In a best maser clock (hereinafter referred to as BMC) algorithm of the IEEE1588, an index value determined for determining the master may be intentionally adjusted among the communication control apparatuses 120. In the BMC, user definable parameters are present and can be used. For example, the user definable parameters are exchanged among the communication control apparatuses 120 according to the dedicated protocol.

As the evaluation index used for selecting the master, besides the reception interval threshold value explained above, the number of the network relay apparatuses 121 to the other communication control apparatuses 120, a communication delay, a communication band, accuracy of a clock, and the like can be used. For example, as explained above, in the communication control apparatuses 120, distribution of the numbers of stages of the network relay apparatuses 121 to the remaining communication control apparatuses 120 is calculated. The communication control apparatus 120 having the smallest distribution is selected (it is expected that types of reception interval threshold values are reduced and synchronization accuracy fluctuation of the entire system is reduced).

When topology changes because of an STP (Spanning Tree Protocol), an RSTP (Rapid Spanning Tree Protocol), a failure of a communication route, and the like, the master may be changed by the master selecting means explained above.

(Effect of the fourth embodiment)

With the master selecting means in this embodiment, it is possible to reduce the reception interval threshold value and perform time synchronization in the system in which the network relay apparatuses 121 are used.

Fifth Embodiment

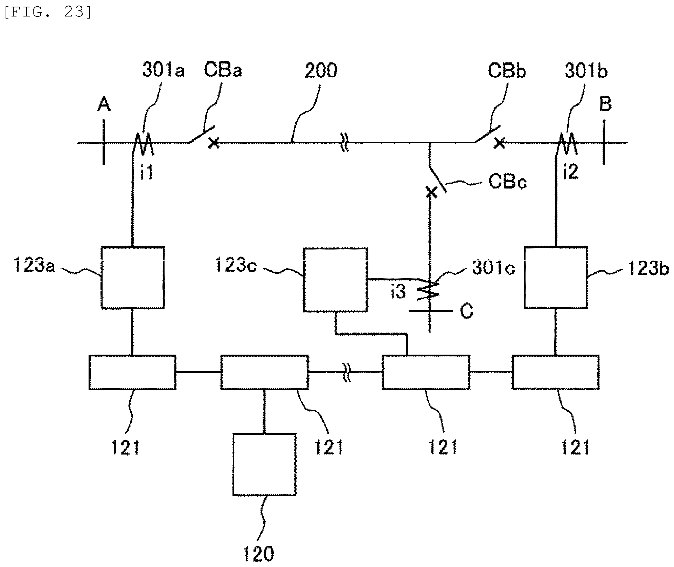

Fig. 23 shows a system configuration of a protection relay system according to a fifth embodiment of the present invention.

In this system, electric currents flowing to a power transmission line 200 are respectively detected by current detectors 301a, 301b, and 301c in a plurality of places in the power transmission line 200, in Fig. 23, in terminals A, B, and C. The communication apparatuses 123a, 123b, and 123c respectively measure electric currents (i1, i2, and i3) at observation points of the power transmission line on the basis of output signals of the current detectors 301a, 301b, and 301c and transmit packet signals including information concerning the measured electric currents to the communication control apparatus 120 via the network relay apparatuses 121. The communication control apparatus 120 calculates a sum of the electric currents (i1+i2+i3) on the basis of the received signals.

In a normal state in which a failure such as a ground fault is absent in the power transmission line, i1+i2+i3=0 is satisfied according to the Kirchhoff's current law. Therefore, the communication control apparatus 120 determines presence or absence of abnormality of the power transmission line on the basis of a calculation result of i1+i2+i3. When i1+i2+i3≠0, the communication control apparatus 120 determines that abnormality has occurred in the power transmission line and transmits a command signal for actuating and opening breakers CBa, CBb, and CBc (connection of the communication apparatuses 123 and the breakers is not shown in the figure) . The breakers CBa, CBb, and CBc break the electric currents flowing to the power transmission line and protect the power transmission line according to the command signal.

In order to determine presence or absence of abnormality of the power transmission line according to whether i1+i2+i3 is 0, i1, i2, and i3 need to be measured at the same time. Therefore, in this embodiment, the communication control apparatus 120 shown in Fig. 23 is set as the communication control apparatus in the first to third embodiments. In Fig. 23, the communication control apparatus 120 is set as a master and the communication apparatuses 123 are set as slaves to perform the time synchronization processing as in the first to third embodiments. Consequently, times of the communication apparatuses 123 are synchronized with one another at high precision and i1, i2, and i3 are measured at the same time.

Further, according to this embodiment, even if the power transmission line extends in a long distance, the number of stages of the network relay apparatuses 121 increases, and queuing (collision) of packets easily occur, it is possible to synchronize the times of the communication apparatuses 123 at high precision. Therefore, it is possible to detect abnormality of the power transmission line at high precision and surely protect the power transmission line when abnormality occurs. Since the highly precise synchronization is possible even if a standard network relay apparatus is used, it is possible to reduce the cost of the system when a large number of network relay apparatuses are used to correspond to the long-distance power transmission line.

The current detection places in the power transmission line are not limited to the three places and may be a plurality of places. It is also possible to set any one of the communication apparatuses 123a to 123c as the communication control apparatus in the first to third embodiments and cause the communication apparatus to execute the time synchronization processing and cause the communication apparatus to perform measurement of electric currents and creation of command signals to the breakers . As the network relay apparatuses 121 in the fifth embodiment, the network relay apparatuses that fix, when packets collide, a transmission interval of the colliding packets explained above as the "first embodiment" may be applied.

Note that the present invention is not limited to the embodiments explained above. Various modifications are included in the present invention. For example, the embodiments are explained in detail in order to clearly explain the present invention and are not always limited to embodiments including all the configurations explained above. Other configurations can be added to, deleted from, and substituted with a part of the configurations of the embodiments.

Reference Signs List

| | |
|---|---|
| 101 | CPU |
| 102 | LAN |
| 108 | memory |
| 109 | nonvolatile storage medium |
| 110 | bus |
| 120 | communication control apparatus |
| 121, 121a to 121e | network relay apparatus |
| 122 | network |
| 123, 123a to 123f | communication apparatus |

| 130 | time synchronization processing unit |
| 131 | communication unit |
| 132 | transmitting unit |
| 133 | receiving unit |
| 134 | reception interval measurement unit |
| 135 | queuing occurrence determination unit |
| 136 | reception interval threshold value determination unit |
| 137 | determination result history storage unit |
| 140, 141 | packet |
| 142 | buffer |
| 150 | group configuring unit |
| 151 | network configuration information storage unit |
| 152 | network configuration information estimating unit |
| 160 | synchronization time |
| 161 | synchronization time selecting unit |
| 170a and 170b, 171, 221a to 221c | communication flow |
| 180 | time synchronization execution control unit |
| 190 | time synchronization control apparatus |
| 200 | power transmission line |
| 220 | transparent clock |
| 301a to 301c | current detector |
| CBa to CBc | breaker |

**Claims**

1. A communication control apparatus (120) including a time synchronization processing unit (130) configured to execute a predetermined time synchronization process on a plurality of communication apparatuses (123) in a network, the communication control apparatus comprising:

   a reception interval measurement unit (134) configured to measure a reception interval of response packets from the plurality of communication apparatuses;
   a network configuration information storage unit (151) configured to store configuration information of the network;
   a reception interval threshold value determination unit (136) configured to set a reception interval threshold value using the configuration information stored by the network configuration information storage unit; and
   a queuing occurrence determination unit (135) configured to compare a measurement result of the reception interval measurement unit and the reception interval threshold value set by the reception interval threshold value determination unit, thereby determining whether any collision of the response packets from any ones of the plurality of communication apparatuses has occurred, wherein
   the time synchronization processing unit is configured to determine on the basis of a detection result of the queuing occurrence determination unit, whether to continue the predetermined time synchronization process, wherein the reception interval threshold value determination unit is configured to set the reception interval threshold value on the basis of a number of stages of network relay apparatuses in a route between the plurality of communication apparatuses and the communication control apparatus.

2. The communication control apparatus according to claim 1, wherein, when the reception interval measured by the reception interval measurement unit is larger than the reception interval threshold value, the queuing occurrence determination unit is configured to determine that collision of the response packets has not occurred.

3. The communication control apparatus according to claim 1, wherein, when the queuing occurrence determination unit determines that collision of the response packet has not occurred, the time synchronization processing unit is configured to continue the predetermined time synchronization process and transmit reception time information of the response packets.

4. The communication control apparatus according to claim 1, wherein, when the queuing occurrence determination unit determines that collision of the response packets has occurred, the time synchronization processing unit is configured to execute the predetermined time synchronization process again without continuing the predetermined time synchronization process and transmit transmission time information.

5. The communication control apparatus according to claim 4, wherein the time synchronization processing unit is configured to transmit the transmission time information to at least transmission destinations including a communication apparatus in which the collision of the response packets is determined as having occurred.

6. The communication control apparatus according to claim 1, wherein, when the response packets are not received within a predetermined time, the time synchronization processing unit is configured to transmit transmission time information.

7. The communication control apparatus according to claim is 1, wherein the communication control apparatus configured to change, according to a number of times of collision determined by the queuing occurrence determination unit, the time until the transmission time information is transmitted.

8. The communication control apparatus according to claim 1, further comprising a group configuring unit (15) configured to divide the plurality of communication apparatuses into predetermined transmission target groups, wherein the time synchronization processing unit is configured to transmit the time information to a group presented by the group configuring unit.

9. The communication control apparatus according to claim 1, further comprising a network configuration information estimating unit (152) configured to transmit a predetermined packet to the network, estimate configuration information of the network from a response to the predetermined packet, and cause the network configuration information storage unit to store the estimated information.

10. The communication control apparatus according to claim 1, wherein the communication control apparatus is configured to configure a plurality of synchronization times on the network to perform time synchronization.

11. The communication control apparatus according to claim 1, wherein the communication control apparatus is adapted to become a synchronization master when a maximum of the reception interval threshold value that the reception interval threshold value determination unit can determine is equal to or smaller than a predetermined value or smaller than a maximum of the reception interval threshold value that other communication control apparatuses can determine.

12. The communication control apparatus according to claim 1, wherein the communication control apparatus is set as a synchronization master on the basis of comparison of a number of stages of network relay apparatuses in a route between the plurality of communication apparatuses and the communication control apparatus and a number of stages of network relay apparatuses in a route between the plurality of communication apparatuses and other communication control apparatuses in the network.

13. A protection relay system configured to protect a power transmission line when abnormality of the power transmission line occurs, the protection relay system comprising:

a communication control apparatus according to any one of the preceding claims;
a plurality of current detectors that are adapted to detect electric currents in a plurality of places of the power transmission line;
a plurality of communication apparatuses that are adapted to measure, according to output signals of the plurality of current detectors, the electric currents flowing to the power transmission line and are adapted to transmit information concerning measured plurality of electric currents into a network;
a plurality of network relay apparatuses that are adapted to relay the transmission of the information concerning the plurality of electric currents in the network; and
wherein the communication control apparatus is adapted to receive the information concerning the plurality of electric currents via the plurality of network relay apparatuses, is further adapted to determine presence or absence of abnormality of the power transmission line on the basis of the received information concerning the plurality of electric currents, and, when determining that the abnormality is present, is adapted to transmit a command signal for opening breakers for breaking the electric currents flowing to the power transmission line.

**EP 3 185 461 B1**

**Patentansprüche**

1. Kommunikationssteuerungsvorrichtung (120), die eine Zeitsynchronisation-Verarbeitungseinheit (130) umfasst, die konfiguriert ist, um einen vorbestimmten Zeitsynchronisationsprozess auf einer Vielzahl von Kommunikationsvorrichtungen (123) in einem Netzwerk auszuführen, wobei die Kommunikationssteuerungsvorrichtung Folgendes umfasst:

   eine Empfangsintervall-Messeinheit (134), die konfiguriert ist, um ein Empfangsintervall von Antwortpaketen von der Vielzahl von Kommunikationsvorrichtungen zu erhalten;
   eine Netzwerkkonfigurationsinformationen-Speichereinheit (151), die konfiguriert ist, um Konfigurationsinformationen des Netzwerks zu speichern;
   eine Empfangsintervall-Schwellenwert-Bestimmungseinheit (136), die konfiguriert ist, um unter Verwendung der von der Netzwerkkonfigurationsinformationen-Speichereinheit gespeicherten Konfigurationsinformationen einen Empfangsintervall-Schwellenwert festzulegen; und
   eine Warteschlangenauftreten-Bestimmungseinheit (135), die konfiguriert ist, um ein Messergebnis der Empfangsintervall-Messeinheit mit dem von der Empfangsintervall-Schwellenwert-Bestimmungseinheit festgelegten Empfangsintervall-Schwellenwert zu vergleichen und dadurch zu bestimmen, ob eine etwaige Kollision der Antwortpakete von der Vielzahl von Kommunikationsvorrichtungen aufgetreten ist, wobei
   die Zeitsynchronisation-Verarbeitungseinheit konfiguriert ist, um auf Basis eines Detektionsergebnisses der Warteschlangenauftreten-Bestimmungseinheit zu bestimmen, ob der vorbestimmte Zeitsynchronisationsprozess fortgesetzt wird,
   wobei die Empfangsintervall-Schwellenwert-Bestimmungseinheit konfiguriert ist, um den Empfangsintervall-Schwellenwert auf Basis einer Anzahl von Stufen von Netzwerkrelaisvorrichtungen auf einem Übertragungsweg zwischen der Vielzahl von Kommunikationsvorrichtungen und der Kommunikationsteuerungsvorrichtung festzulegen.

2. Kommunikationssteuerungsvorrichtung nach Anspruch 1, wobei wenn das von der Empfangsintervall-Messeinheit gemessene Empfangsintervall größer als der Empfangsintervall-Schwellenwert ist, die Warteschlangenauftreten-Bestimmungseinheit konfiguriert ist, um zu bestimmen, dass keine Kollision der Antwortpakete aufgetreten ist.

3. Kommunikationssteuerungsvorrichtung nach Anspruch 1, wobei wenn die Warteschlangenauftreten-Bestimmungseinheit bestimmt, dass keine Kollision der Antwortpakete aufgetreten ist, die Zeitsynchronisation-Verarbeitungseinheit konfiguriert ist, um den vorbestimmten Zeitsynchronisationsprozess fortzusetzen und die Empfangszeitinformationen der Antwortpakete zu übertragen.

4. Kommunikationssteuerungsvorrichtung nach Anspruch 1, wobei wenn die Warteschlangenauftreten-Bestimmungseinheit bestimmt, dass eine Kollision der Antwortpakete aufgetreten ist, die Zeitsynchronisation-Verarbeitungseinheit konfiguriert ist, um den vorbestimmten Zeitsynchronisationsprozess erneut auszuführen, ohne den vorbestimmten Zeitsynchronisationsprozess fortzusetzen, und die Übertragungszeitinformationen zu übertragen.

5. Kommunikationssteuerungsvorrichtung nach Anspruch 4, wobei die Zeitsynchronisation-Verarbeitungseinheit konfiguriert ist, die Übertragungszeitinformationen an zumindest solche Übertragungsdestinationen zu übertragen, die eine Kommunikationsvorrichtung umfassen, bei der bestimmt wurde, dass die Kollision der Antwortpakete aufgetreten ist.

6. Kommunikationssteuerungsvorrichtung nach Anspruch 1, wobei wenn die Antwortpakete nicht innerhalb eines vorbestimmten Zeitraums empfangen werden, die Zeitsynchronisation-Verarbeitungseinheit konfiguriert ist, Übertragungszeitinformationen zu übertragen.

7. Kommunikationssteuerungsvorrichtung nach Anspruch 1, wobei die Kommunikationssteuerungsvorrichtung konfiguriert ist, die Zeitspanne bis zur Übertragung der Übertragungszeitinformationen, gemäß einer Anzahl von Kollisionen, die von der Warteschlangenauftreten-Bestimmungseinheit bestimmt wurde, zu ändern.

8. Kommunikationssteuerungsvorrichtung nach Anspruch 1, die ferner eine Gruppenkonfigurationseinheit (15) umfasst, die konfiguriert ist, um die Vielzahl von Kommunikationsvorrichtungen in vorbestimmte Übertragungszielgruppen zu unterteilen, wobei die Zeitsynchronisation-Verarbeitungseinheit konfiguriert ist, um die Zeitinformationen an eine von der Gruppenkonfigurationseinheit dargestellte Gruppe zu übertragen.

9. Kommunikationssteuerungsvorrichtung nach Anspruch 1, die ferner eine Netzwerckonfigurationsinformationen-Schätzeinheit (152) umfasst, die konfiguriert ist, ein vorbestimmtes Paket an das Netzwerk zu übertragen, Konfigurationsinformationen des Netzwerks aus einer Antwort an das vorbestimmte Paket zu schätzen und die Netzwerkkonfigurationsinformationen-Speichereinheit dazu zu veranlassen, die geschätzten Informationen zu speichern.

10. Kommunikationssteuerungsvorrichtung nach Anspruch 1, wobei die Kommunikationssteuerungsvorrichtung konfiguriert ist, um eine Vielzahl von Synchronisationen auf dem Netzwerk zu konfigurieren, um eine Zeitsynchronisation durchzuführen.

11. Kommunikationssteuerungsvorrichtung nach Anspruch 1, wobei die Kommunikationssteuerungsvorrichtung ausgebildet ist, um ein Synchronisationsmaster zu werden, wenn ein Maximum des Empfangsintervall-Schwellenwerts, den die Empfangsintervall-Schwellenwert-Bestimmungseinheit bestimmen kann, gleich oder kleiner als ein vorbestimmter Wert oder kleiner als ein Maximum des Empfangsintervall-Schwellenwerts ist, den andere Kommunikationssteuerungsvorrichtungen bestimmen können.

12. Kommunikationssteuerungsvorrichtung nach Anspruch 1, wobei die Kommunikationssteuerungsvorrichtung auf der Basis eines Vergleichs einer Anzahl von Stufen von Netzwerkrelaisvorrichtungen auf einem Übertragungsweg zwischen der Vielzahl von Kommunikationsvorrichtungen und der Kommunikationsteuerungsvorrichtung mit einer Anzahl von Stufen von Netzwerkrelaisvorrichtungen auf einem Übertragungsweg zwischen der Vielzahl von Kommunikationsvorrichtungen und anderen Kommunikationsteuerungsvorrichtungen im Netzwerk als Synchronisationsmaster festgelegt wird.

13. Schutzrelaissystem, das konfiguriert ist, um eine Leistungsübertragungsleitung zu schützen, wenn eine Abweichung der Leistungsübertragungsleitung auftritt, wobei das Schutzrelaissystem Folgendes umfasst:

   eine Kommunikationssteuerungsvorrichtung nach einem der vorangegangenen Ansprüche;
   eine Vielzahl von Stromdetektoren, die ausgelegt sind, um elektrische Ströme in einer Vielzahl von Stellen der Leistungsübertragungsleitung zu detektieren;
   eine Vielzahl von Kommunikationsvorrichtungen, die ausgelegt sind, um die zu der Leistungsübertragungsleitung fließende elektrische Ströme gemäß den Ausgabesignalen der Vielzahl von Stromdetektoren zu messen, und die ausgelegt sind, um Informationen betreffend die gemessene Vielzahl von elektrischen Strömen in einem Netzwerk zu übertragen;
   eine Vielzahl von Netzwerkrelaisvorrichtungen, die ausgelegt sind, um die Übertragung der Informationen betreffend die Vielzahl von elektrischen Strömen in dem Netzwerk weiterzugeben; und
   wobei die Kommunikationssteuerungsvorrichtung, die ausgelegt ist, um die Informationen betreffend die Vielzahl von elektrischen Strömen über die Vielzahl der Netzwerkrelaisvorrichtungen zu empfangen, ferner ausgelegt ist, um die Gegenwart oder Abwesenheit einer Abweichung der Leistungsübertragungsleitung auf Basis der empfangenen Informationen betreffend die Vielzahl von elektrischen Strömen zu bestimmen, und wenn bestimmt wurde, dass die Abweichung vorliegt, ausgelegt ist, ein Befehlssignal zum Öffnen von Unterbrechern zum Unterbrechen der elektrischen Ströme, die zur Leistungsübertragungsleitung fließen, zu übertragen.


**Revendications**

1. Appareil de commande de communication (120) comprenant une unité de traitement de synchronisation de temps (130) configurée pour exécuter un processus de synchronisation de temps prédéterminé sur une pluralité d'appareils de communication (123) dans un réseau, l'appareil de commande de communication comprenant :

   une unité de mesure d'intervalle de réception (134) configurée pour mesurer un intervalle de réception de paquets de réponse provenant de la pluralité d'appareils de communication ;
   une unité de stockage d'informations de configuration de réseau (151) configurée pour stocker des informations de configuration du réseau ;
   une unité de détermination de valeur de seuil d'intervalle de réception (136) configurée pour établir une valeur de seuil d'intervalle de réception en utilisant les informations de configuration stockées par l'unité de stockage d'informations de configuration de réseau ; et
   une unité de détermination d'occurrence de mise en file d'attente (135) configurée pour comparer un résultat de mesure de l'unité de mesure d'intervalle de réception et la valeur de seuil d'intervalle de réception établie par l'unité de détermination de valeur de seuil d'intervalle de réception, en déterminant ainsi si une quelconque collision des paquets de réponse en provenance de l'un quelconque de la pluralité d'appareils de communication est survenue, dans lequel

l'unité de traitement de synchronisation de temps est configurée pour déterminer, sur la base d'un résultat de détection de l'unité de détermination d'occurrence de mise en file d'attente, s'il faut continuer le processus de synchronisation de temps prédéterminé,

dans lequel l'unité de détermination de valeur de seuil d'intervalle de réception est configurée pour établir la valeur de seuil d'intervalle de réception sur la base d'un certain nombre d'étages d'appareils de relais de réseau dans une route entre la pluralité d'appareils de communication et l'appareil de commande de communication.

2. Appareil de commande de communication selon la revendication 1, dans lequel, lorsque l'intervalle de réception mesuré par l'unité de mesure d'intervalle de réception est plus grand que la valeur de seuil d'intervalle de réception, l'unité de détermination d'occurrence de mise en file d'attente est configurée pour déterminer qu'une collision des paquets de réponse n'est pas survenue.

3. Appareil de commande de communication selon la revendication 1, dans lequel, lorsque l'unité de détermination d'occurrence de mise en file d'attente détermine qu'une collision du paquet de réponse n'est pas survenue, l'unité de traitement de synchronisation de temps est configurée pour continuer le processus de synchronisation de temps prédéterminé et transmettre des informations de temps de réception des paquets de réponse.

4. Appareil de commande de communication selon la revendication 1, dans lequel, lorsque l'unité de détermination d'occurrence de mise en file d'attente détermine qu'une collision des paquets de réponse est survenue, l'unité de traitement de synchronisation de temps est configurée pour exécuter à nouveau le processus de synchronisation de temps prédéterminé sans poursuivre le processus de synchronisation de temps prédéterminé et transmettre des informations de temps de transmission.

5. Appareil de commande de communication selon la revendication 4, dans lequel l'unité de traitement de synchronisation de temps est configurée pour transmettre les informations de temps de transmission à au moins des destinations de transmission comprenant un appareil de communication dans lequel la collision des paquets de réponse est déterminée comme étant survenue.

6. Appareil de commande de communication selon la revendication 1, dans lequel, lorsque les paquets de réponse ne sont pas reçus dans un temps prédéterminé, l'unité de traitement de synchronisation de temps est configurée pour transmettre des informations de temps de transmission.

7. Appareil de commande de communication selon la revendication 1, dans lequel l'appareil de commande de communication est configuré pour changer, selon un nombre de temps de collision déterminé par l'unité de détermination d'occurrence de mise en file d'attente, le temps jusqu'à ce que les informations de temps de transmission soient transmises.

8. Appareil de commande de communication selon la revendication 1, comprenant en outre une unité de configuration de groupe (15) configurée pour diviser la pluralité d'appareils de communication en groupes cibles de transmission prédéterminés, dans lequel

l'unité de traitement de synchronisation de temps est configurée pour transmettre les informations de temps à un groupe présenté par l'unité de configuration de groupe.

9. Appareil de commande de communication selon la revendication 1, comprenant en outre une unité d'estimation d'informations de configuration de réseau (152) configurée pour transmettre un paquet prédéterminé au réseau, estimer des informations de configuration du réseau à partir d'une réponse au paquet prédéterminé, et amener l'unité de stockage d'informations de configuration de réseau à stocker les informations estimées.

10. Appareil de commande de communication selon la revendication 1, dans lequel l'appareil de commande de communication est configuré pour configurer une pluralité de temps de synchronisation sur le réseau afin d'effectuer une synchronisation de temps.

11. Appareil de commande de communication selon la revendication 1, dans lequel l'appareil de commande de communication est adapté pour devenir un maître de synchronisation lorsqu'un maximum de la valeur de seuil d'intervalle de réception que l'unité de détermination de valeur de seuil d'intervalle de réception peut déterminer est égal ou inférieur à une valeur prédéterminée ou inférieure à un maximum de la valeur de seuil d'intervalle de réception que d'autres appareils de commande de communication peuvent déterminer.

12. Appareil de commande de communication selon la revendication 1, dans lequel l'appareil de commande de communication est établi en tant que maître de synchronisation sur la base d'une comparaison d'un nombre d'étages d'appareils de relais de réseau dans une route entre la pluralité d'appareils de communication et l'appareil de commande de communication et d'un nombre d'étages d'appareils de relais de réseau dans une route entre la pluralité d'appareils de communication et d'autres appareils de commande de communication dans le réseau.

13. Système de relais de protection configuré pour protéger une ligne de transmission de puissance lorsqu'une anomalie de la ligne de transmission de puissance survient, le système de relais de protection comprenant :

un appareil de commande de communication selon l'une quelconque des revendications précédentes ;
une pluralité de détecteurs de courant qui sont adaptés pour détecter des courants électriques dans une pluralité d'endroits de la ligne de transmission de puissance ;
une pluralité d'appareils de communication qui sont adaptés pour mesurer, selon des signaux de sortie de la pluralité de détecteurs de courant, les courants électriques circulant vers la ligne de transmission de puissance et sont adaptés pour transmettre des informations concernant la pluralité mesurée de courants électriques dans un réseau ;
une pluralité d'appareils de relais de réseau qui sont adaptés pour relayer la transmission des informations concernant la pluralité de courants électriques dans le réseau ; et
dans lequel l'appareil de commande de communication est adapté pour recevoir les informations concernant la pluralité de courants électriques via la pluralité d'appareils de relais de réseau, est en outre adapté pour déterminer la présence ou l'absence d'anomalie de la ligne de transmission d'énergie sur la base des informations reçues concernant la pluralité des courants électriques, et, lors de la détermination de la présence de l'anomalie, est adapté pour transmettre un signal de commande d'ouverture de disjoncteur pour couper les courants électriques circulant vers la ligne de transmission d'énergie.

[FIG. 1]

EP 3 185 461 B1

[FIG. 2]

EP 3 185 461 B1

[FIG. 3]

```
                    ┌─────────────┐ 150
                    │    GROUP    │
                    │ CONFIGURING │
                    │    UNIT     │
                    └──────┬──────┘
                           │
                           ▼
    ┌──────────────┐ 130        ┌──────────────────┐ 131
    │              │            │  COMMUNICATION   │
    │     TIME     │            │      UNIT        │
    │SYNCHRONIZATION│──────────▶│ ┌──────────────┐ │ 132
    │  PROCESSING  │            │ │ TRANSMITTING │ │───▶
    │     UNIT     │            │ │     UNIT     │ │
    │              │            │ └──────────────┘ │
    │              │◀───────────│ ┌──────────────┐ │ 133
    │              │            │ │RECEIVING UNIT│ │◀──
    └──────▲───────┘            │ └──────▲───────┘ │
           │                    └────────┼─────────┘
    ┌──────┴───────┐ 135         ┌───────┴────────┐ 134
    │   QUEUING    │             │   RECEPTION    │
    │  OCCURRENCE  │◀────────────│    INTERVAL    │
    │ DETERMINATION│             │  MEASUREMENT   │
    │     UNIT     │             │     UNIT       │
    └──────▲───────┘             └────────────────┘
           │
    ┌──────┴───────┐ 136   ┌────────────┐ 151   ┌────────────┐ 152
    │RECEPTION INTERVAL│   │  NETWORK   │        │  NETWORK   │
    │ THRESHOLD VALUE │◀──│CONFIGURATION│◀──────│CONFIGURATION│
    │ DETERMINATION UNIT│  │INFORMATION │        │INFORMATION │
    └──────────────┘       │STORAGE UNIT│        │ESTIMATING  │
                           └────────────┘        │    UNIT    │
    ┌──────────────┐ 137                         └────────────┘
    │ DETERMINATION│
    │RESULT HISTORY│
    │ STORAGE UNIT │
    └──────────────┘
```

[FIG. 4]

```
                140         142
 OUTPUT    ┌───┬───┬───┬───┬───┬───┐
  ◀────────│ ○ │ ○ │   │   │   │   │◀── INPUT
           └───┴───┴───┴───┴───┴───┘
                141
```

30

[FIG. 5]

[FIG. 6]

START

↓ S001

SET AS MASTER

↓ S020

DETERMINE TRANSMIS-
SION TARGET GROUP

↓ S002

TRANSMIT Sync MESSAGE

↓ S003

STAND BY
FOR RECEPTION
OF PACKET — N

↓ Y S004

MEASURE RECEPTION
INTERVAL

↓ S005

COLLISION
OF PACKETS HAS
OCCURRED? — N

↓ Y S006

STORE COMMUNICATION
PARTNER IN WHICH COL-
LISION HAS OCCURRED

S007

TRANSMIT Delay_Resp
MESSAGE

↓ S008

PACKETS HAVE
BEEN RECEIVED FROM
ALL COMMUNICATION
PARTNERS? — N

↓ Y S009

COMMUNICA-
TION PARTNER IN WHICH
PACKETS HAVE COLLIDED
IS PRESENT? — N →

S011

CLEAR RECORD OF
COMMUNICATION
PARTNER IN WHICH
PACKET HAVE COLLIDED

↓ Y S010

CHANGE DESTINATION

S012

END CONDITION
IS SATISFIED? — N

↓ Y

END

S013

PREDETERMINED
TIME HAS ELAPSED? — N

↓ Y

[FIG. 7]

(a)

| NUMBER OF STAGES | RECEPTION INTERVAL THRESHOLD VALUE |
|---|---|
| 1 | T1 |
| 2 | T2 |
| ... | ... |

(b)

| COMMUNICATION APPARATUS | RECEPTION INTERVAL THRESHOLD VALUE |
|---|---|
| 192. 168. 0. 2 | T1 |
| 192. 168. 0. 5 | T2 |
| ... | ... |

[FIG. 8]

| NUMBER OF STAGES | RESPONSE TIME |
|---|---|
| 1 | $T < T1$ |
| 2 | $T1 \leq T < T2$ |
| ... | ... |

[FIG. 9]

[FIG. 10]

[FIG. 11]

[FIG. 12]

[FIG. 13]

```
                          START

                                    S030
                     Sync MESSAGE
                     IS RECEIVED?        N

                          Y
                                    S031                        S035
                        MEASURE                        SYNCHRONIZATION
                    RECEPTION TIME t2                  PACKET IS RECEIVED?    N

                                    S032                        Y
                  TIME SYNCHRONIZATION                                S036
                  EXECUTION CONTROL
                    UNIT CONTROLS                       RECEIVED PACKET
                  TRANSMISSION TIMING                   IS Sync MESSAGE?      N
                  OF Delay_Req MESSAGE

                                    S033                        Y                S037
                        TRANSMIT                                        EXECUTE SYNCHRONI-
                    Delay_Req MESSAGE                                    ZATION PROCESSING

                                    S034
                        MEASURE                                             END
                    TRANSMISSION TIME t3
```

[FIG. 14]

```
                    ( START )
                        |
                        |  S060
        +-------------------------------+
        |      MASTER TRANSMITS         |
        |    Sync MESSAGE TO SLAVE      |
        +-------------------------------+
                        |
                        |  S061
        +-------------------------------+
        |   MASTER STORES TRANSMIS-     |
        |  SION TIME OF Sync MESSAGE    |
        +-------------------------------+
                        |
                        |  S062
        +-------------------------------+
        |    SLAVE RECORDS RECEPTION    |
        |     TIME OF Sync MESSAGE      |
        +-------------------------------+
                        |
                        |  S063
        +-------------------------------+
        |     MASTER NOTIFIES SLAVE     |
        |     OF TRANSMISSION TIME      |
        |       OF Sync MESSAGE         |
        +-------------------------------+
                        |
                        |  S064
        +-------------------------------+
        |  SLAVE TRANSMITS Delay_Req    |
        |     MESSAGE TO MASTER         |
        +-------------------------------+
                        |
                        |  S065
        +-------------------------------+
        |       SLAVE RECORDS           |
        |    TRANSMISSION TIME OF       |
        |      Delay_Req MESSAGE        |
        +-------------------------------+
                        |
                        |  S066
        +-------------------------------+
        |  MASTER RECEIVES Delay_Req    |
        |     MESSAGE AND RECORDS       |
        |       RECEPTION TIME          |
        +-------------------------------+
                        |
                        |  S067
        +-------------------------------+
        |   MASER PUTS RECEPTION        |
        |     TIME OF Delay_Req         |
        |  MESSAGE ON Delay_Resp        |
        |   MESSAGE AND NOTIFIES        |
        |  SLAVE OF RECEPTION TIME      |
        +-------------------------------+
                        |
                        |  S068
        +-------------------------------+
        |    SLAVE CALCULATES           |
        | COMMUNICATION DELAY AND       |
        | DIFFERENCE BETWEEN TIMES      |
        +-------------------------------+
                        |
                    (  END  )
```

[FIG. 15]

[FIG. 16]

[FIG. 17]

FLOW 221a

123a

FLOW 221b

121

220

120

122

123b

FLOW 221c

123c

EP 3 185 461 B1

[FIG. 18]

EP 3 185 461 B1

[FIG. 19]

[FIG. 20]

FLOW 171

123c

122    121    220a    220b

120    FLOW 170b

FLOW 170a    123b

123d    123a

EP 3 185 461 B1

45

[FIG. 21]

[FIG. 22]

APPLICATION RANGE

120

121

122

[FIG. 23]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010074600 A
- US 2014098706 A1
- JP 2012023654 A

### Non-patent literature cited in the description

- IEEE Standard for a Precision Clock Synchronization Protocol for Networked Measurement and Control Systems. *IEEE 1588-2008*